(19) Europäisches Patentamt / European Patent Office / Office européen des brevets

(11) **EP 4 583 558 A1**

(12) **EUROPEAN PATENT APPLICATION**
published in accordance with Art. 153(4) EPC

(43) Date of publication:
**09.07.2025 Bulletin 2025/28**

(21) Application number: **22959025.2**

(22) Date of filing: **20.09.2022**

(51) International Patent Classification (IPC):
**H04W 24/02** (2009.01)

(52) Cooperative Patent Classification (CPC):
**H04W 24/02**

(86) International application number:
**PCT/CN2022/119907**

(87) International publication number:
**WO 2024/060013 (28.03.2024 Gazette 2024/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **MA, Mengyao**
**Shenzhen, Guangdong 518129 (CN)**

• **XUE, Ye**
**Hong Kong University Of Science And Technology,**
**Clear Water Bay Road Hong Kong (CN)**
• **LAU, Kin Nang**
**Hong Kong University Of Science And Technology,**
**Clear Water Bay Road Hong Kong (CN)**

(74) Representative: **Maiwald GmbH**
**Engineering**
**Elisenhof**
**Elisenstrasse 3**
**80335 München (DE)**

(54) **DATA PROCESSING METHOD AND RELATED DEVICE**

(57) Provided are a data processing method and a related device. The method includes: determining, based on first data in a data processing device A and second data from a first data processing device, a Riemannian gradient of the first data, where the first data and the second data are data having a Riemann characteristic; and then updating the first data based on the Riemannian gradient. During implementation of technical solutions provided in this application, because the first data and the second data are data having a Riemann characteristic, to be specific, the first data and the second data are data in a Riemannian manifold with a fixed rank, a gradient of the first data obtained based on the first data and the second data is a gradient on the Riemannian manifold, namely, a Riemannian gradient. Further, updating the first data based on the Riemannian gradient can ensure that updated first data meets a fixed-rank constraint, namely, has a fixed-rank attribute. This helps reduce storage overheads, transmission overheads, and/or computing overheads of the first data.

FIG. 2

**Description**

**TECHNICAL FIELD**

This application relates to the data processing field, and in particular, to a data processing method and a related device.

**BACKGROUND**

Artificial intelligence (artificial intelligence, AI) refers to a theory, a method, a technology, and an application system that are used to simulate, extend, and expand human intelligence by using a digital computer or a machine controlled by a digital computer, to perceive an environment, obtain knowledge, and obtain an optimal result by using the knowledge. In other words, artificial intelligence is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision-making functions.

In the conventional technology, with development of machine learning technologies, a machine learning model has millions or even billions of model parameters, and storage overheads, transmission overheads, and/or computing overheads of the model are relatively high. How to reduce transmission overheads or computing overheads of high-dimensional data such as a model parameter is a hot research topic for persons skilled in the art.

**SUMMARY**

This application provides a data processing method and a related device, to effectively ensure a fixed-rank attribute of data, and help reduce storage overheads, transmission overheads, and/or computing overheads of the data.

According to a first aspect, this application provides a data processing method. The method is applied to a data processing device A in a data processing system (that the method is applied to the data processing device A may be understood as that the method is performed by the data processing device A, or the method is performed by a component in the data processing device A, for example, a chip (system)). The data processing system includes a first data processing device and a plurality of second data processing devices. The data processing device A is one of the plurality of second data processing devices. Each second data processing device in the plurality of second data processing devices may perform the data processing method. A specific execution process is the same as that of the data processing device A.

Further, the data processing method includes the following steps: determining, based on first data in a data processing device A and second data from a first data processing device, a Riemannian gradient of the first data, where the first data and the second data are data having a Riemann characteristic; and then updating the first data based on the Riemannian gradient.

Data having a Riemann characteristic may be understood as data in a Riemannian manifold with a fixed rank, and specifically refers to data that meets the following characteristic: The data is an element in the Riemannian manifold with a fixed rank, to be specific, the rank is X, where X is a positive integer. For example, when a form of the data is a matrix, in this case, a rank of a corresponding matrix is X. When X is relatively small, the data is data in a Riemannian manifold with a low rank.

In this solution, because the first data and the second data are data having a Riemann characteristic, to be specific, the first data and the second data are data in a Riemannian manifold with a fixed rank, a gradient of the first data obtained based on the first data and the second data is a gradient on the Riemannian manifold, namely, a Riemannian gradient. Further, updating the first data based on the Riemannian gradient can ensure that updated first data meets a fixed-rank constraint, namely, has a fixed-rank attribute. This helps reduce storage overheads, transmission overheads, and/or computing overheads of the first data. For example, when the data processing method in this solution is applied to a federated learning scenario, the first data may be understood as a local model, and the second data is understood as a global model. By using this solution, fixed-rank attributes of the local model and the global model can be ensured, model convergence can be ensured, and storage overheads, transmission overheads, and/or computing overheads of the model are reduced, thereby helping increase a model training speed.

With reference to the first aspect, in an implementation, the determining, based on first data in the data processing device A and second data from the first data processing device, a Riemannian gradient of the first data specifically includes:

in a $t^{th}$ time of processing, computing, based on a first difference between first data $G_t$ in the data processing device A and second data $W_t$ from the first data processing device and a first intermediate state of the first data $G_t$, a Riemannian gradient $Q_t$ of the first data $G_t$, where the first intermediate state is a second difference between first data $G_{t-1}$ and a Riemannian gradient $Q_{t-1}$ in a $(t-1)^{th}$ time of processing.

In this solution, the Riemannian gradient $Q_t$ of the first data $G_t$ is computed by using the first difference between the first data $G_t$ and the second data $W_t$ and the first intermediate state of the first data $G_t$. The first intermediate state is an intermediate state corresponding to the first data $G_t$ in the $t^{th}$ time of processing.

With reference to the first aspect, in an implementation, the updating the first data based on the Riemannian gradient specifically includes:

updating the first data $G_t$ based on the Riemannian gradient $Q_t$ to obtain first data $G_{t+1}$, where a distance between the first data $G_{t+1}$ and the second data $W_t$ is less than a distance between the first data $G_t$ and second data $W_{t-1}$ from the first data processing device in the $(t-1)^{th}$ time of processing; or a distance between the first data $G_{t+1}$ and second data $W_{t+1}$ from the first data processing device in a $(t+1)^{th}$ time of processing is less than a distance between the first data $G_t$ and the second data $W_t$.

In this solution, the first data is updated based on the Riemannian gradient, so that the updated first data, namely, the first data $G_{t+1}$, is closer to the second data. Specifically, the distance between the first data $G_{t+1}$ and the second data $W_t$ may be less than the distance between the first data $G_t$ and the second data $W_{t-1}$; or the distance between the first data $G_{t+1}$ and the second data $W_{t+1}$ may be less than the distance between the first data $G_t$ and the second data $W_t$.

For example, when the method in this solution is applied to a federated learning scenario, a local model may be understood as the first data, and a global model may be understood as the second data. By using the method in this solution, not only fixed-rank attributes of the local model and the global model can be ensured, model convergence can be ensured, and model computing overheads can be reduced, but also the local model can be close to the global model, thereby increasing a model training speed.

With reference to the first aspect, in an implementation, the updating the first data $G_t$ based on the Riemannian gradient $Q_t$ to obtain first data $G_{t+1}$ specifically includes:

performing singular value decomposition on a second intermediate state of the first data $G_{t+1}$ to obtain a second left singular matrix, a second diagonal matrix, and a second right singular matrix, where the second intermediate state is a third difference between the first data $G_t$ and the Riemannian gradient $Q_t$; and then obtaining the first data $G_{t+1}$ based on the second left singular matrix, the second diagonal matrix, and the second right singular matrix.

In this solution, singular value decomposition is performed on the second intermediate state of the first data $G_{t+1}$ to update the first data Gt, namely, obtain the first data $G_{t+1}$. The singular value decomposition is truncated singular value decomposition with a rank of X, where X is a positive integer. The truncated singular value decomposition with a rank of X is used to ensure that the rank of the first data before and after the update is the same, namely, the rank remains unchanged.

With reference to the first aspect, in an implementation, the Riemannian gradient $Q_t$ of the first data $G_t$ is computed based on the first difference, a first left singular matrix of the first intermediate state, and a first right singular matrix of the first intermediate state.

In this solution, truncated singular value decomposition with a rank of X is first performed on the first intermediate state, to obtain the first left singular matrix and the first right singular matrix of the first intermediate state, and then the Riemannian gradient $Q_t$ of the first data $G_t$ is obtained based on the first difference, the first left singular matrix, and the first right singular matrix.

With reference to the first aspect, in an implementation, the Riemannian gradient $Q_t$ of the first data $G_t$ is computed based on a standard gradient, the first difference, and the first intermediate state, where the standard gradient is a derivative of a target loss function corresponding to a task to which the first data $G_t$ is oriented.

In this solution, the standard gradient may be first computed, and then the Riemannian gradient $Q_t$ of the first data $G_t$ is computed based on the standard gradient, the first difference, and the first intermediate state.

With reference to the first aspect, in an implementation, the Riemannian gradient $Q_t$ of the first data $G_t$ is computed based on the standard gradient, the first difference, a first left singular matrix of the first intermediate state, and a first right singular matrix of the first intermediate state.

In this solution, the standard gradient, the first left singular matrix, and the first right singular matrix may be first computed, and then the Riemannian gradient $Q_t$ of the first data $G_t$ is computed based on the standard gradient, the first difference, the first left singular matrix, and the first right singular matrix.

With reference to the first aspect, in an implementation, the data processing method further includes: sending third data to the first data processing device, where the third data is obtained based on the first data $G_{t+1}$.

In this solution, after obtaining the first data $G_{t+1}$, the data processing device A sends the third data to the first data processing device, so that the first data processing device obtains the second data $W_{t+1}$ based on third data of the plurality of second data processing devices. For example, the first data processing device may send the second data $W_{t+1}$ to the plurality of second data processing devices, so that the plurality of second data processing devices separately perform the $(t+1)^{th}$ time of processing based on respective first data $G_{t+1}$ and second data $W_{t+1}$, to obtain next updated first data, namely, first data $G_{t+2}$.

With reference to the first aspect, in an implementation, the third data is any one of the following: the first data $G_{t+1}$ itself, a first singular matrix of the first data $G_{t+1}$ and a second singular matrix of the first data $G_{t+1}$, first randomly precoded data of the first singular matrix and second randomly precoded data of the second singular matrix, and third randomly precoded data and fourth randomly precoded data, where

the third randomly precoded data is a product of the first randomly precoded data and a preset power parameter, the fourth randomly precoded data is a product of the second randomly precoded data and the preset power parameter, and the preset power parameter is determined by a preset power control policy.

Specifically, in a case in which the third data is the first singular matrix of the first data $G_{t+1}$ and the second singular matrix of the first data $G_{t+1}$, different from a case in which the first data $G_{t+1}$ is directly sent, the first singular matrix of the first data $G_{t+1}$ and the second singular matrix of the first data $G_{t+1}$ are separately sent, so that transmission overheads of the data processing device A can be reduced. For example, the first data $G_{t+1}$ is an M×N weight matrix with a rank of X, the transmission overheads of the data processing device A may be reduced from O(M×N) to O(X×(M+N)), where O() represents time complexity.

In this solution, after obtaining the first data $G_{t+1}$, the data processing device A may transfer data information of the first data $G_{t+1}$ in any one of the foregoing manners, to be specific, transfer the third data to the first data processing device, so that the first data processing device can obtain new second data based on the third data of the plurality of second data processing devices.

With reference to the first aspect, in an implementation, the third data is the first singular matrix and the second singular matrix; and correspondingly, the data processing method further includes:

performing singular value decomposition on the second intermediate state of the first data $G_{t+1}$ to obtain the second left singular matrix, the second diagonal matrix, and the second right singular matrix of the second intermediate state, where the second intermediate state is a third difference between the first data $G_t$ and the Riemannian gradient $Q_t$; and obtaining the first singular matrix based on the second left singular matrix and the second diagonal matrix, and obtaining the second singular matrix based on the second right singular matrix and the second diagonal matrix.

In this solution, truncated singular value decomposition with a rank of X is performed on the second intermediate state, to obtain the second left singular matrix, the second diagonal matrix, and the second right singular matrix of the second intermediate state; then the first singular matrix is obtained based on the second left singular matrix and the second diagonal matrix; and the second singular matrix is obtained based on the second left and right singular matrices and the second diagonal matrix.

With reference to the first aspect, in an implementation, the third data is the first randomly precoded data and the second randomly precoded data; and correspondingly, the data processing method further includes:

separately performing random precoding on the first singular matrix and the second singular matrix to obtain the first randomly precoded data and the second randomly precoded data.

In this solution, the first randomly precoded data corresponding to the first singular matrix and the second randomly precoded data corresponding to the second singular matrix may be obtained by separately performing random precoding on the first singular matrix and the second singular matrix.

With reference to the first aspect, in an implementation, the third data is the first randomly precoded data and the second randomly precoded data. Correspondingly, the sending third data to the first data processing device includes:

sending the first randomly precoded data to the first data processing device by using a first radio resource same as that of another second data processing device, and sending the second randomly precoded data to the first data processing device by using a second radio resource same as that of another second data processing device;
or
the third data is the third randomly precoded data and the fourth randomly precoded data, and correspondingly, the sending third data to the first data processing device includes:
sending the third randomly precoded data to the first data processing device by using a first radio resource same as that of another second data processing device, and sending the fourth randomly precoded data to the first data processing device by using a second radio resource same as that of another second data processing device.

In this solution, when the third data is the first randomly precoded data and the second randomly precoded data, or the third data is the third randomly precoded data and the fourth randomly precoded data, the data processing device A may send the third data to the first data processing device in an over-the-air aggregation manner. The over-the-air aggregation manner means that the data processing device A sends the third data by using a radio resource same as that of another second data processing device. In other words, the data processing method in this solution creatively proposes that random precoding is first performed on data, and then randomly precoded data is sent in an over-the-air aggregation manner, so that the data processing method is compatible with over-the-air aggregation. For example, when the data processing method in this solution is applied to a federated learning scenario, this solution can be used to not only ensure a fixed-rank attribute of a model, helping reducing storage overheads, transmission overheads, and/or computing overheads of model data, but also fully use a radio resource.

With reference to the first aspect, in an implementation, the first data includes at least one of the following: parameter data of a neural network model, a feature matrix of a channel matrix in a multiple-input multiple-output transmission scenario, and a principal component data matrix of an image.

According to a second aspect, this application further provides a data processing method. The method is applied to a first data processing device in a data processing system (that the method is applied to the first data processing device may be understood as that the method is performed by the first data processing device, or the method is performed by a component in the first data processing device, for example, a chip (system)). The data processing system further includes a plurality of second data processing devices.

The data processing method includes the following steps:

In this solution, the first data processing device obtains second data based on third data of the plurality of second data processing devices, and then sends the second data to the plurality of second data processing devices, so that the plurality of second data processing devices update their respective first data based on the second data, ensuring that updated first data has a fixed-rank attribute, which helps reduce storage overheads, transmission overheads, and/or computing overheads of the first data.

With reference to the second aspect, in an implementation, the data processing method further includes: receiving the third data from the plurality of second data processing devices, where the third data is obtained based on first data in the second data processing device, and the first data is data having a Riemann characteristic.

In this solution, the first data processing device receives the third data from the plurality of second data processing devices, to obtain a plurality of pieces of third data. The third data is obtained based on the first data of the second data processing device.

With reference to the second aspect, in an implementation, the third data is any one of the following: the first data itself, a first singular matrix of the first data and a second singular matrix of the first data, first randomly precoded data of the first singular matrix and second randomly precoded data of the second singular matrix, and third randomly precoded data and fourth randomly precoded data, where

the first randomly precoded data and the second randomly precoded data are obtained by respectively performing random precoding on the first singular matrix and the second singular matrix, the third randomly precoded data is a product of the first randomly precoded data and a preset power parameter, the fourth randomly precoded data is a product of the second randomly precoded data and the preset power parameter, and the preset power parameter is determined by a preset power control policy.

With reference to the second aspect, in an implementation, the third data is the first data itself, and correspondingly, the obtaining second data based on third data from the plurality of second data processing devices specifically includes:

projecting an average value onto a fixed-rank manifold to obtain the second data, where the average value is an average value of a plurality of pieces of first data.

In this solution, the average value is projected onto the fixed-rank (the rank is X) manifold to obtain the second data, implementing obtaining of the second data based on the third data of the plurality of second data processing devices.

With reference to the second aspect, in an implementation, the projecting an average value onto a fixed-rank manifold to obtain the second data specifically includes:

performing singular value decomposition on the average value to obtain a third left singular matrix, a third diagonal matrix, and a third right singular matrix; and obtaining the second data based on the third left singular matrix, the third diagonal matrix, and the third right singular matrix.

This solution provides a specific implementation of projecting the average value onto the fixed-rank manifold to obtain the second data, to be specific, performing truncated singular value decomposition with a rank of X on the average value, and then obtaining the second data based on the third left singular matrix, the third diagonal matrix, and the third right singular matrix that are obtained through decomposition.

With reference to the second aspect, in an implementation, the third data is the first singular matrix and the second singular matrix, and correspondingly, the obtaining second data based on third data from the plurality of second data processing devices specifically includes:

projecting a first product onto a fixed-rank manifold to obtain the second data, where the first product is a product of a first matrix and a second matrix, the first matrix is obtained based on first singular matrices of the plurality of second data processing devices, and the second matrix is obtained based on second singular matrices of the plurality of second data processing devices.

In this solution, the first product is projected onto the fixed-rank (the rank is X) manifold to obtain the second data, implementing obtaining of the second data based on the third data of the plurality of second data processing devices.

With reference to the second aspect, in an implementation, the projecting a first product onto a fixed-rank manifold to obtain the second data specifically includes:

performing singular value decomposition on the first product to obtain a fourth left singular matrix, a fourth diagonal matrix, and a fourth right singular matrix; and obtaining the second data based on the fourth left singular matrix, the fourth diagonal matrix, and the fourth right singular matrix.

This solution provides a specific implementation of projecting the first product onto the fixed-rank manifold to obtain the second data, to be specific, performing truncated singular value decomposition with a rank of X on the first product, and then obtaining the second data based on the fourth left singular matrix, the fourth diagonal matrix, and the fourth right singular matrix that are obtained through decomposition.

With reference to the second aspect, in an implementation, the obtaining second data based on third data from the plurality of second data processing devices specifically includes:

obtaining a third aggregated signal and a fourth aggregated signal based on a first aggregated signal and a second aggregated signal, so that an expectation of a second product is equal to an expectation of a third product; and obtaining the second data based on the third aggregated signal and the fourth aggregated signal, where

the second product is a product of the third aggregated signal and the fourth aggregated signal, and the third product is a product of a sum of the first randomly precoded data of the plurality of second data processing devices and a sum of the second randomly precoded data of the plurality of second data processing devices, where

the third data is the first randomly precoded data and the second randomly precoded data, the first aggregated signal carries the first randomly precoded data of the plurality of second data processing devices on a first radio resource, and the second aggregated signal carries the second randomly precoded data of the plurality of second data processing devices on a second radio resource; or the third data is the third randomly precoded data and the fourth randomly precoded data, the first aggregated signal carries the third randomly precoded data of the plurality of second data processing devices on a first radio resource, and the second aggregated signal carries the fourth randomly precoded data of the plurality of second data processing devices on a second radio resource.

In this solution, when the second data processing device transmits the third data in an over-the-air aggregation manner, the first data processing device receives two aggregated signals, namely, the first aggregated signal and the second aggregated signal, and first obtains the third aggregated signal and the fourth aggregated signal based on the first aggregated signal and the second aggregated signal, where the third aggregated signal and the fourth aggregated signal may be respectively understood as an estimated signal of the sum of the first randomly precoded data of the plurality of second data processing devices and an estimated signal of the sum of the second randomly precoded data of the plurality of second data processing devices. The second data may be obtained by using the estimated third aggregated signal and the estimated fourth aggregated signal.

With reference to the second aspect, in an implementation, the obtaining the second data based on the third aggregated signal and the fourth aggregated signal includes:
projecting a fifth aggregated signal onto a fixed-rank manifold to obtain the second data, where the fifth aggregated signal is obtained based on the third aggregated signal and the fourth aggregated signal.

With reference to the second aspect, in an implementation, the obtaining the second data based on the third aggregated signal and the fourth aggregated signal includes:
performing singular value decomposition on a fifth aggregated signal to obtain a fifth left singular matrix, a fifth diagonal matrix, and a fifth right singular matrix; and obtaining the second data based on the fifth left singular matrix, the fifth diagonal matrix, and the fifth right singular matrix.

With reference to the second aspect, in an implementation, the first data includes at least one of the following: parameter data of a neural network model, a feature matrix of a channel matrix in a multiple-input multiple-output transmission scenario, and a principal component data matrix of an image.

According to a third aspect, this application further provides a data processing method. The method is applied to a data processing device A in a data processing system (that the method is applied to the data processing device A may be understood as that the method is performed by the data processing device A, or the method is performed by a component in the data processing device A, for example, a chip (system)). The data processing system includes a first data processing device and a plurality of second data processing devices. The data processing device A is one of the plurality of second data processing devices.

The data processing method includes the following steps:
performing random precoding on first data of the data processing device A and second data of the data processing device A to obtain first randomly precoded data of the first data and second randomly precoded data of the second data; and sending the first randomly precoded data to the first data processing device by using a first radio resource same as that of another second data processing device, and sending the second randomly precoded data to the first data processing device by using a second radio resource same as that of another second data processing device.

In this solution, the data processing device A performs random precoding on the first data and the second data to obtain the first randomly precoded data and the second randomly precoded data, and then may send the first randomly precoded data and the second randomly precoded data to the first data processing device in an over-the-air aggregation manner, so that an expectation of a product of a first aggregated signal carrying first randomly precoded data of the plurality of second data processing devices and a second aggregated signal carrying second randomly precoded data of the plurality of second data processing devices that are received by the first data processing device is the same as an expectation of a sum of products of the plurality of second data processing devices, where the product of the second data processing device is a product of the first data and the second data of the second data processing device, thereby implementing unbiased data estimation.

With reference to the third aspect, in an implementation, the data processing method further includes: performing singular value decomposition on third data of the data processing device A to obtain a first left singular matrix, a first diagonal matrix, and a first right singular matrix of the third data; and obtaining the first data based on the first left singular matrix and the first diagonal matrix, and obtaining the second data based on the first right singular matrix and the first diagonal matrix.

According to a fourth aspect, this application further provides a data processing method. The method is applied to a first data processing device in a data processing system (that the method is applied to the first data processing device may be understood as that the method is performed by the first data processing device, or the method is performed by a component in the first data processing device, for example, a chip (system)). The data processing system further includes a plurality of second data processing devices.

The data processing method includes the following steps: receiving a first aggregated signal and a second aggregated signal, where the first aggregated signal carries first randomly precoded data of the plurality of second data processing devices on a first radio resource, and the second aggregated signal carries second randomly precoded data of the plurality of second data processing devices on a second radio resource; and obtaining fourth data based on the first aggregated signal and the second aggregated signal, where the fourth data is related to first data of the plurality of second data processing devices and second data of the plurality of second data processing devices.

In this solution, because an expectation of a product of the first aggregated signal and the second aggregated signal is the same as an expectation of a sum of products of the plurality of second data processing devices, where the product of the second data processing device is a product of the first data and the second data of the second data processing device. Therefore, the fourth data related to a plurality of pieces of first data and a plurality of pieces of second data may be obtained based on the first aggregated signal and the second aggregated signal.

With reference to the fourth aspect, in an implementation, the obtaining fourth data based on the first aggregated signal and the second aggregated signal specifically includes: obtaining a third aggregated signal and a fourth aggregated signal based on the first aggregated signal and the second aggregated signal, so that an expectation of a first product is equal to an expectation of a second product; and then obtaining the fourth data based on the third aggregated signal and the fourth aggregated signal, where the first product is a product of the third aggregated signal and the fourth aggregated signal, and the second product is a product of the first randomly precoded data carried in the first aggregated signal and the second randomly precoded data carried in the second aggregated signal.

In this solution, the third aggregated signal and the fourth aggregated signal are obtained first based on the first aggregated signal and the second aggregated signal. The third aggregated signal and the fourth aggregated signal may be respectively understood as being corresponding to an estimated signal of a sum of the first randomly precoded data of the plurality of second data processing devices of the first aggregated signal, and an estimated signal of a sum of the second randomly precoded data of the plurality of second data processing devices of the second aggregated signal. The fourth data may be obtained by using the estimated third aggregated signal and the estimated fourth aggregated signal.

With reference to the fourth aspect, in an implementation, the obtaining the fourth data based on the third aggregated signal and the fourth aggregated signal specifically includes: performing singular value decomposition on a fifth aggregated signal to obtain a second left singular matrix, a second diagonal matrix, and a second right singular matrix, where the fifth aggregated signal is obtained based on the third aggregated signal and the fourth aggregated signal; and obtaining the fourth data based on the second left singular matrix, the second diagonal matrix, and the second right singular matrix.

In this solution, a specific method for obtaining the fourth data based on the third aggregated signal and the fourth aggregated signal is provided. Specifically, singular value decomposition is performed on the fifth aggregated signal to obtain the second left singular matrix, the second diagonal matrix, and the second right singular matrix, and then the fourth data may be obtained based on the second left singular matrix, the second diagonal matrix, and the second right singular matrix.

With reference to the fourth aspect, in an implementation, the fourth data is data having a Riemann characteristic.

According to a fifth aspect, this application provides a data processing device, including a module configured to perform the method according to the first aspect.

According to a sixth aspect, this application provides a data processing device, including a module configured to perform the method according to the second aspect.

According to a seventh aspect, this application provides a data processing device, including a module configured to perform the method according to the third aspect.

According to an eighth aspect, this application provides a data processing device, including a module configured to perform the method according to the fourth aspect.

According to a ninth aspect, this application provides a data processing apparatus, where the data processing apparatus includes one or more processors. The one or more processors are configured to execute a computer program stored in one or more memories, so that the data processing apparatus implements the method according to any one of the first aspect, the second aspect, the third aspect, and the fourth aspect.

With reference to the ninth aspect, in an implementation, the data processing apparatus further includes the one or more memories.

With reference to the ninth aspect, in an implementation, the data processing apparatus is a chip or a chip system.

According to a tenth aspect, this application provides a computer-readable storage medium, including instructions. When the instructions run on a processor, the method according to any one of the first aspect, the second aspect, the third aspect, and the fourth aspect is implemented.

According to an eleventh aspect, this application provides a computer program product, including a computer program, and when the computer program is run, the method described in any one of the first aspect, the second aspect, the third aspect, and the fourth aspect is implemented.

## BRIEF DESCRIPTION OF DRAWINGS

FIG. 1 is a diagram of a structure of a data processing system according to an embodiment of this application;

FIG. 2 is a method flowchart of a data processing method according to an embodiment of this application;

FIG. 3 is a schematic flowchart of interaction of a data processing method according to an embodiment of this application;

FIG. 4 is a method flowchart of another data processing method according to an embodiment of this application;

FIG. 5 is a method flowchart of another data processing method according to an embodiment of this application;

FIG. 6 is a diagram of a structure of a data processing device according to an embodiment of this application;

FIG. 7 is a diagram of a structure of another data processing device according to an embodiment of this application;

FIG. 8 is a diagram of a structure of another data processing device according to an embodiment of this application;

FIG. 9 is a diagram of a structure of another data processing device according to an embodiment of this application; and

FIG. 10 is another diagram of a structure of a data processing apparatus according to an embodiment of this application.

## DESCRIPTION OF EMBODIMENTS

Terms used in the following embodiments of this application are merely intended to describe specific embodiments, but are not intended to limit this application. As used in the specification and the appended claims of this application, the singular expressions "a", "an", "the", "the foregoing", "one", and "this" also include plural expressions, unless otherwise explicitly indicated in the context of the singular expressions. It should be further understood that the term "and/or" used in this application means and includes any or all possible combinations of one or more listed items.

The terms "first" and "second" mentioned below are merely intended for a purpose of description, and shall not be understood as an indication or implication of relative importance or implicit indication of the quantity of indicated technical features. Therefore, features defined with "first" and "second" may explicitly or implicitly include one or more features. In the descriptions of embodiments of this application, unless otherwise specified, "a plurality of" means two or more.

Because embodiments of this application are related to a method, for ease of understanding, the following first describes related terms and concepts in embodiments of this application.

(1) Riemannian manifold

The Riemannian manifold is a differential manifold, in which a tangent space of each point p defines a point product, and its value changes smoothly with p. It allows us to define a length, an angle, an area, a volume, curvature, a function gradient, and a divergence of a vector domain.

The Riemannian manifold has many applications, for instance, Einstein used it to derive General Relativity. In optimization, it can be considered that some difficult constrained problems in a Euclidean space are converted into unconstrained problems in the Riemannian manifold.

(2) Rank

In linear algebra, a rank of a matrix is a highest order of a nonzero minor of the matrix, and a rank of a vector group is a quantity of vectors included in a maximum unrelated group of the vector group.

(3) Riemannian gradient

In manifold optimization, the Riemannian gradient is a gradient defined on a Riemannian manifold. It can be considered as a tangent vector at a point on the Riemannian manifold.

(4) Riemannian distance (Riemannian metric)

The Riemannian distance is a metric suitable for any differential manifold. For any such manifold, a symmetric, positive-definite bilinear form may be selected at each point p: $T_p \times T_p \to \mathbb{R}$, where $T_p$ is a tangent space on p, $\to$ represents mapping, and $\mathbb{R}$ represents a real number field. For each differentiable path on this manifold, its length is defined as an integral of a length of a tangent vector to each point on the path, where the integral may be computed by using a path parameter. Finally, to obtain a metric on each pair of points {x, y} defined on the manifold, a minimum value of path lengths of all paths from x to y may be obtained. In short, the Riemannian distance is generalization of a Euclidean distance on a Riemannian manifold.

(5) Data having a Riemann characteristic

The data having a Riemann characteristic refers to data in a Riemannian manifold with a fixed rank, namely, data belonging to $M_X = \{\Gamma \in \mathbb{R}^{M \times N} : rank(\Gamma) = X\}$. $M_X$ represents a data set, $\Gamma$ is an element in a matrix $\mathbb{R}$ M × N, each element meets a characteristic that a rank is X, $\mathbb{R}$ represents a real number field, M×N is dimensionality of the matrix, and M, N, and X are positive integers. For example, the data having a Riemann characteristic is, for example, parameter data of a neural network model, a feature matrix of a channel matrix in a multiple-input multiple-output (multi-input multi-output, MIMO) transmission scenario, or a principal component data matrix of an image.

The parameter data of the neural network model is various data related to the neural network model, for example, parameters of layers of the neural network model and/or weight data of the neural network model.

MIMO refers to a transmission system in which a plurality of antenna elements are used on both a transmit end and a receive end of a communication link. MIMO can change a multipath factor existing in a conventional communication system into a factor that is favorable to user communication performance, thereby multiplying a service transmission rate. It is assumed that a quantity of antenna elements on the transmit end is i, a quantity of antenna elements on the receive end is j, and a channel matrix H of a MIMO channel is an i×j matrix, to be specific,

$$H = \begin{bmatrix} h_{11} & ... & h_{1j} \\ ... & ... & ... \\ h_{i1} & ... & h_{ij} \end{bmatrix},$$

where

$h_{ij}$ represents a channel coefficient from an antenna element i to an antenna element j. In addition, a corresponding feature matrix may be obtained by performing feature extraction on the channel matrix H.

Principal component analysis (principal component analysis, PCA) is a widely used dimensionality reduction technique for machine learning. PCA, also referred to as principal component analysis, is a multivariate statistical method that linearly transforms correlated high-dimensional indicators into a few mutually independent low-dimensional comprehensive indicators. Principal component data of an image may be obtained by performing principal component analysis on the image. Generally, a data form of the principal component data of the image is a matrix, to be specific, the foregoing principal component data matrix.

(6) Singular value decomposition

Singular value decomposition (singular value decomposition, SVD) is to decompose a matrix. Assuming that a matrix B is an m×n matrix, SVD of the matrix B is:

$$B=U{\textstyle\sum}V^{T}$$

U is an m×m matrix, each column vector in U is referred to as a left singular vector of B, and U is also referred to as a left singular matrix. $\sum$ is an m×n matrix, and all elements except elements on a main diagonal are 0. Each element on the main diagonal is referred to as a singular value of B. $\sum$ is referred to as a diagonal matrix. V is an n×n matrix. Each column vector in V is referred to as a right singular vector of B, and V is also referred to as a right singular matrix. $V^T$ is a transpose of V. Both U and V are unitary matrices.

(7) Truncated SVD

Truncated SVD, namely, $SVD_X(.)$, refers to an SVD operation of computing only X maximum singular values and singular vectors corresponding to the X singular values.

(8) Over-the-air aggregation

Over-the-air aggregation (over-the-air aggregation): is also referred to as over-the-air superposition/over-the-air computing. It uses free aggregation of gradients/model weights in a wireless channel, instead of aggregating gradients/-model weights in a network (cloud) like a traditional training method. Specifically, all Internet of Things sensors share one common radio resource block. In each round of communication, a network broadcasts a latest model weight to all the sensors. The sensor uses the model weight to compute a local gradient/model weight based on local original data, and transmits the local gradient/model weight to a cloud through the common radio resource. Local gradients/model weights from different sensors are aggregated in a wireless channel, and the network can estimate an aggregated gradient/model weight based on received signals. Advantages of over-the-air aggregation are that not only the radio resource can be effectively used, but also privacy protection is facilitated (the original data does not need to be transmitted to the network).

(9) Federated learning

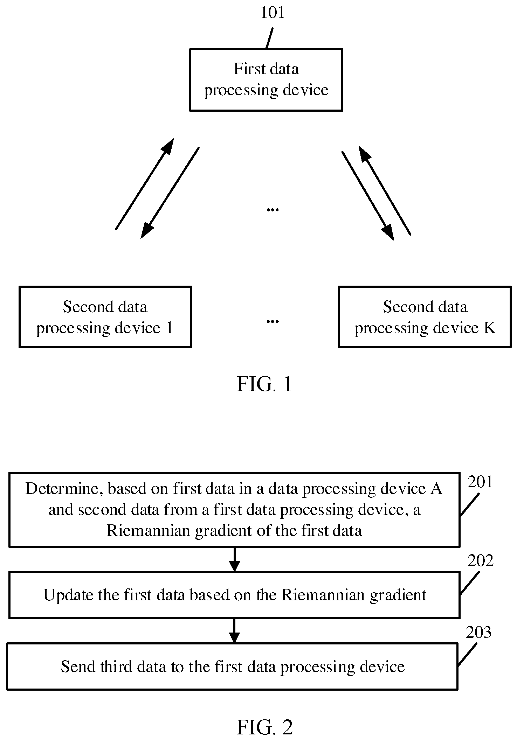

Federated learning (federated learning, FL) is a distributed machine learning technology. A core idea thereof is to perform distributed model training among a plurality of data sources that have local data. Without exchanging local individuals or sample data, federated learning only exchanges model parameters or intermediate results to build a global model based on virtual converged data. In this way, data privacy protection and data sharing computing are balanced, to be specific, a new application paradigm of "data is available but invisible" and "data remains local, while the model moves".
In the conventional technology, with development of machine learning technologies, a machine learning model has millions or even billions of model parameters, and transmission overheads and/or computing overheads of the model are relatively high. Therefore, an embodiment of this application provides a data processing method, to effectively ensure a fixed-rank attribute of data, and help reduce storage overheads, transmission overheads, and/or computing overheads of the data.
For example, when the data processing method in this solution is applied to a federated learning scenario, first data may be understood as a local model, and second data is understood as a global model. By using this solution, fixed-rank attributes of the local model and the global model can be ensured, model convergence can be ensured, and storage overheads, transmission overheads, and/or computing overheads of the model are reduced, thereby helping increase a model training speed.
The following describes a data processing method provided in an embodiment of this application.
First, a data processing method in an embodiment of this application is applied to a data processing system. Refer to FIG. 1. FIG. 1 is a diagram of a structure of a data processing system according to an embodiment of this application. The data processing system includes a first data processing device 101 and a plurality of second data processing devices that are in a communication connection (wireless connection or wired connection) to the first data processing device 101. The plurality of second data processing devices include a second data processing device 1, ..., and a second data processing device K, where K is greater than or equal to 2. In this embodiment of this application, a process of performing the data processing method by each second data processing device is the same. The following uses a data processing device A as an example for specific description. The data processing device A is one of the plurality of second data processing devices.
Further, the first data processing device 101 is a device having a computing capability, and includes but is not limited to a personal computer, a desktop computer, a server, a server cluster, a virtual machine, a virtual machine cluster, a cloud device, an access network device, a core network device, a terminal device, and the like. For example, a cloud is a public cloud, a private cloud, or a hybrid cloud.
An access network device is a radio access network (radio access network, RAN) node (or device) that connects a terminal to a wireless network, and may also be referred to as a base station. Some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including a CU node and a DU node. The RAN device including a CU node and a DU node splits protocol layers of a gNB in an NR system. Functions of some protocol layers are controlled by the CU in a centralized manner, and functions of some or all of remaining protocol layers are distributed in the DU, and the CU controls the DU in a centralized manner.

The core network device is a device, in a core network (core network, CN), that provides service support for a terminal device. Currently, examples of some core network devices are: an access and mobility management function (access and mobility management function, AMF) entity, a session management function (session management function, SMF) entity, and a user plane function (user plane function, UPF) entity, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

A terminal device (terminal device) may also be referred to as a terminal, user equipment (user equipment, UE), a mobile station (mobile station, MS), a mobile terminal (mobile terminal, MT), or the like. The terminal device may be a mobile phone (mobile phone), a pad (Pad), a media player, an intelligent wearable device, a personal digital assistant (personal digital assistant, PDA), a terminal device with wireless receiving and sending functions, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. The terminal device with wireless receiving and sending functions is a terminal device having a wireless communication capability, for example, a wireless sensor. Wireless communication includes wireless fidelity (Wi-Fi), Bluetooth, mobile communication (2G/3G/4G/5G/6G, and the like), ultra wide band (ultra wide band, UWB), ZigBee (ZigBee) communication, and the like.

The second data processing device includes but is not limited to a personal computer, a desktop computer, a server, a server cluster, a virtual machine, a virtual machine cluster, a cloud device, an access network device, a core network device, a terminal device, and the like.

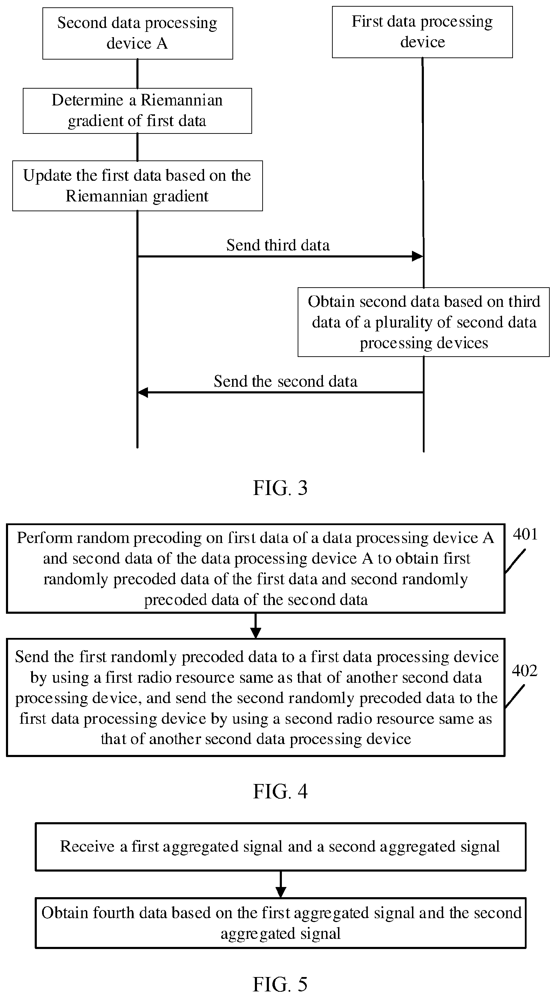

Refer to FIG. 2 and FIG. 3. FIG. 2 is a method flowchart of a data processing method according to an embodiment of this application, and FIG. 3 is a schematic flowchart of interaction of a data processing method according to an embodiment of this application. The data processing method includes the following steps:

201: Determine, based on first data in a data processing device A and second data from a first data processing device, a Riemannian gradient of the first data.

The first data and the second data are data having a Riemann characteristic. Data having a Riemann characteristic may be understood as data in a Riemannian manifold with a fixed rank, and specifically refers to data that meets the following characteristic: The data is an element in the Riemannian manifold with a fixed rank, to be specific, the rank is X, where X is a positive integer. A specific value of X may be determined according to an actual situation, for example, determined based on precision of the data in combination with computing overheads, transmission overheads, or storage overheads of the data. For example, when a form of the data is a matrix, in this case, a rank of a corresponding matrix is X. When X is relatively small, the data is data in a Riemannian manifold with a low rank.

For example, the first data includes at least one of the following: parameter data of a neural network model, a feature matrix of a channel matrix in a multiple-input multiple-output transmission scenario, and a principal component data matrix of an image. For example, in the following description, the first data is described by using weight data of a neural network model as an example. For example, when the first data is parameter data of a neural network model, the data processing method in this embodiment may be applied to a scenario in which a wireless sensor and a cloud server jointly perform machine learning, and is implemented on a central server (cloud) and a local sensor therein.

Correspondingly, the data processing device A receives the second data from the first data processing device.

202: Update the first data based on the Riemannian gradient.

In this solution, because the first data and the second data are data having a Riemann characteristic, to be specific, the first data and the second data are data in a Riemannian manifold with a fixed rank, a gradient of the first data obtained based on the first data and the second data is a gradient on the Riemannian manifold, namely, a Riemannian gradient. Further, updating the first data based on the Riemannian gradient can ensure that updated first data meets a fixed-rank constraint, namely, has a fixed-rank attribute. This helps reduce storage overheads, transmission overheads, and/or computing overheads of the first data.

Specifically, it is difficult to solve the fixed-rank constraint in a Euclidean space. Because this problem to be solved is non-convex, convex relaxation is usually used, which results in a solution that does not necessarily meet the fixed-rank constraint. If these are done on a Riemannian manifold with a fixed rank, the fixed-rank constraint can be strictly met.

For example, refer to FIG. 2 and FIG. 3. The data processing method further includes the following step:
203: Send third data to the first data processing device, where the third data is obtained based on first data $G_{t+1}$, and the first data $G_{t+1}$ refers to updated first data in step 202.

Correspondingly, the first data processing device receives third data from a plurality of second data processing devices, and the first data processing device obtains the second data based on the third data from the plurality of second data processing devices, and sends the second data to the plurality of second data processing devices.

In this solution, it is assumed that a data processing system performs data processing for I times, where t is any one of the I times. The first data $G_{t+1}$ is obtained based on second data $W_t$, and the second data $W_t$ is second data used to compute the Riemannian gradient during a $t^{th}$ time of processing. After obtaining the first data $G_{t+1}$, the data processing device A sends the third data to the first data processing device, so that the first data processing device obtains second data $W_{t+1}$ based on the third data of the plurality of second data processing devices, where the second data $W_{t+1}$ refers to second data used to compute the Riemannian gradient during a $(t+1)^{th}$ time of processing. For example, the first data processing device may send the second data $W_{t+1}$ to the plurality of second data processing devices, so that the plurality of second data processing devices separately perform the $(t+1)^{th}$ time of processing based on respective first data $G_{t+1}$ and second data $W_{t+1}$, to obtain next updated first data, namely, first data $G_{t+2}$.

For example, when t is 1, the data processing device A obtains the second data $W_t$ from the first data processing device. A specific obtaining method may be that the first data processing device sends the second data $W_t$ to the plurality of second data processing devices, and the second data $W_t$ received by the plurality of second data processing devices may be the same or different. For another example, when t is 1, a method for obtaining the second data $W_t$ by the data processing device A may alternatively be obtaining one piece of second data $W_t$ according to a data generation rule set by the first data processing device, where the second data $W_t$ generated by the plurality of second data processing devices according to the rule may be the same or different. For another example, when t is 1, each of the plurality of second data processing devices may randomly generate one piece of second data $W_t$.

For example, if a data processing stop condition is met, the data processing device A stops data processing. The stop condition may be that a total quantity of processing times reaches I, and a specific value of I may be set according to an actual situation; or the stop condition is that the first data or the second data meets a preset condition, where the preset condition is, for example, a target loss function corresponding to a task to which the first data is oriented converges, or a target loss function corresponding to a task to which the second data is oriented converges.

For example, step 201 specifically includes:
in a $t^{th}$ time of processing, computing, based on a first difference between first data $G_t$ in the data processing device A and second data $W_t$ from the first data processing device and the first data $G_t$, a Riemannian gradient $Q_t$ of the first data $G_t$.

Specifically, the Riemannian gradient $Q_t$ of the first data $G_t$ may be obtained through computing based on the first difference and the first data by using an existing gradient computing method. Details are not described herein.

For another example, step 201 specifically includes:

in a $t^{th}$ time of processing, computing, based on a first difference between first data $G_t$ in the data processing device A and second data $W_t$ from the first data processing device and a first intermediate state of the first data $G_t$, a Riemannian gradient $Q_t$ of the first data $G_t$, where
the first data $G_t$ is first data in the $t^{th}$ time of processing, and the first intermediate state is a second difference between first data $G_{t-1}$ and a Riemannian gradient $Q_{t-1}$ in a $(t-1)^{th}$ time of processing.

In this embodiment, the Riemannian gradient $Q_t$ of the first data $G_t$ is computed by using the first difference between the first data $G_t$ and the second data $W_t$ and the first intermediate state of the first data $G_t$. The first intermediate state is an intermediate state corresponding to the first data $G_t$ in the $t^{th}$ time of processing. Further, the Riemannian gradient $Q_t$ of the first data $G_t$ may be obtained through computing based on the first difference and the first intermediate state by using a gradient computing method.

Further, for example, the first intermediate state may alternatively be a difference between the first data $G_{t-1}$ and (a product of the Riemannian gradient $Q_{t-1}$ and a weighting coefficient), and a specific value of the weighting coefficient may be set according to an actual situation.

For another example, the Riemannian gradient $Q_t$ of the first data $G_t$ is computed based on the first difference, a first left singular matrix of the first intermediate state, and a first right singular matrix of the first intermediate state.

In this solution, truncated singular value decomposition with a rank of X is first performed on the first intermediate state, to obtain the first left singular matrix and the first right singular matrix of the first intermediate state, and then the Riemannian gradient $Q_t$ of the first data $G_t$ is obtained based on the first difference, the first left singular matrix, and the first right singular matrix by using a gradient computing method.

For another example, the Riemannian gradient $Q_t$ of the first data $G_t$ is computed based on a standard gradient, the first difference, and the first intermediate state, where the standard gradient is a derivative of a target loss function corresponding to a task to which the first data $G_t$ is oriented.

In this solution, the standard gradient may be first computed, and then the Riemannian gradient $Q_t$ of the first data $G_t$ is computed based on the standard gradient, the first difference, and the first intermediate state by using a gradient computing method.

For another example, the Riemannian gradient $Q_t$ of the first data $G_t$ is computed based on the standard gradient, the first difference, a first left singular matrix of the first intermediate state, and a first right singular matrix of the first intermediate state.

In this solution, the standard gradient, the first left singular matrix, and the first right singular matrix may be first computed, and then the Riemannian gradient $Q_t$ of the first data $G_t$ is computed based on the standard gradient, the first difference, the first left singular matrix, and the first right singular matrix by using a gradient computing method.

For example, step 202 specifically includes:
updating the first data $G_t$ based on the Riemannian gradient $Q_t$ to obtain first data $G_{t+1}$, where a distance between the first data $G_{t+1}$ and the second data $W_t$ is less than a distance between the first data $G_t$ and second data $W_{t-1}$ from the first data processing device in the $(t-1)^{th}$ time of processing; or a distance between the first data $G_{t+1}$ and second data $W_{t+1}$ from the first data processing device in a $(t+1)^{th}$ time of processing is less than a distance between the first data $G_t$ and the second data $W_t$.

In this solution, the first data is updated based on the Riemannian gradient, so that the updated first data, namely, the first data $G_{t+1}$, is closer to the second data. Specifically, the distance between the first data $G_{t+1}$ and the second data $W_t$ may be less than the distance between the first data $G_t$ and the second data $W_{t-1}$; or the distance between the first data $G_{t+1}$ and the second data $W_{t+1}$ may be less than the distance between the first data $G_t$ and the second data $W_t$. For example, the distance may be obtained by using a Euclidean distance, a Riemannian distance, or the like between the first data and the second data.

For example, when the method in this solution is applied to a federated learning scenario, a local model may be understood as the first data, and a global model may be understood as the second data. By using the method in this solution, not only fixed-rank attributes of the local model and the global model can be ensured, model convergence can be ensured, and model computing overheads can be reduced, but also the local model can be close to the global model, thereby increasing a model training speed.

For another example, step 202 specifically includes:

performing singular value decomposition on a second intermediate state of the first data $G_{t+1}$ to obtain a second left singular matrix, a second diagonal matrix, and a second right singular matrix, where the second intermediate state is a third difference between the first data $G_t$ and the Riemannian gradient $Q_t$; and
obtaining the first data $G_{t+1}$ based on the second left singular matrix, the second diagonal matrix, and the second right singular matrix.

In this solution, singular value decomposition is performed on the second intermediate state of the first data $G_{t+1}$ to update the first data $G_t$, namely, obtain the first data $G_{t+1}$. The singular value decomposition is truncated singular value decomposition with a rank of X, where X is a positive integer. The truncated singular value decomposition with a rank of X is used to ensure that the rank of the first data before and after the update is the same, namely, the rank remains unchanged.

Further, for example, the second intermediate state may alternatively be a difference between the first data $G_t$ and (a product of the Riemannian gradient $Q_t$ and a weighting coefficient), and a specific value of the weighting coefficient may be set according to an actual situation.

The following uses an example in which first data G is weight data (namely, a weight matrix) $\Theta$ of a neural network model to specifically describe a process of computing the Riemannian gradient and an update process of the weight data.

In this embodiment, a plurality of local devices in a federated learning scenario may be understood as a plurality of second data processing devices, and a server is understood as a first data processing device. This embodiment of this application provides a method for updating a local model based on a Riemannian gradient. Local models may be updated in parallel on the plurality of local devices. To be specific, a weight matrix $\Theta_0^t$ of a global model is given, and a manner of updating a weight matrix $\Theta_k$ of a local model of each local device k is as follows:

$$\Theta_k^{(t+1)} = \arg\min_{\Theta_k \in M_X} \frac{1}{D \times K} \sum_{l=1}^{D} f(\Theta_k, \zeta_{k,l}) + \frac{\mu}{2K} \|\Theta_0^t - \Theta_k\|_F^2. \qquad \text{(Formula 1)}$$

The local device k is any one of K local devices, and arg min (z) represents a value of a variable when an expression z reaches a minimum value. A cardinality (cardinality) of a local dataset $D_k$ of each local device k is $|D_k| = D$, where K is a total quantity of local devices, and K is greater than or equal to 2. $\Theta_k$ is a weight matrix of the local model of the local device k, and $\Theta_k \in M_X$. f(.) is an optimization loss function of an $l^{th}$ data sample $\zeta_{k,l}$ from the local dataset $D_k$ according to the weight matrix $\Theta_k$ of the local model. $M_X = \{\Gamma \in \mathbb{R}^{M \times N} : rank(\Gamma) = X\}$ is a manifold with a rank of X. $\mu > 0$ is a weighting coefficient. $\|.\|_F$ represents a Frobenius norm (F-norm) of the matrix. $\Theta_0^t$ represents the weight matrix of the global model. Formula 1 is to make the model of each local device k close to "being the same" by using a right half part of the equation.

However, the foregoing optimization objective, namely, Formula 1, does not have a closed-form solution. Therefore, this embodiment of the present invention creatively proposes a method for updating a local model based on a Riemannian gradient.

First, a Riemannian gradient of the weight matrix of the local model needs to be computed. In this embodiment, for example, a Riemannian gradient $Q_t$ of first data $G_t$ is computed based on a standard gradient, a first difference, a first left singular matrix in a first intermediate state, and a first right singular matrix in the first intermediate state. For example, the first intermediate state $\widehat{\Theta}_k^{(t)}$ is $\Theta_k^{(t-1)} - \eta^{(t-1)}\hat{g}_k^{(t-1)}$, $\eta^{(t-1)}$ is a learning rate (used to adjust a training speed of a model in model training, where the learning rate may be understood as a weighting coefficient herein), and a specific value of the learning rate may be set according to an actual situation. To be specific, a difference between first data $\Theta_k^{(t-1)}$ in a $(t-1)^{th}$ time of processing and a product of a Riemannian gradient $\hat{g}_k^{(t-1)}$ obtained in the $(t-1)^{th}$ time of processing and a learning rate $\eta^{(t-1)}$ of the model in the $(t-1)^{th}$ time of processing is used as a first intermediate state $\widehat{\Theta}_k^{(t)}$ of first data $\Theta_k^{(t)}$ in a $t^{th}$ time of processing.

The Riemannian gradient of the weight matrix of the local model is:

$$\hat{g}_k^{(t)} = \left(U_k^{(t)}\right)^T\left(\nabla_k^{(t)} + \Delta_k^{(t)}\right) + \left(\nabla_k^{(t)} + \Delta_k^{(t)}\right)V_k^{(t)}\left(V_k^{(t)}\right)^T - U_k^{(t)}\left(U_k^{(t)}\right)^T\left(\nabla_k^{(t)} + \Delta_k^{(t)}\right)V_k^{(t)}\left(V_k^{(t)}\right)^T.$$

A superscript (t) represents the $t^{th}$ time of processing, $\nabla_k^{(t)} = \nabla_{\Theta_k} \frac{1}{K|D_k^{(t)}|} \Sigma_{\zeta_{k,l} \in D_k^{(t)}} f(\Theta_k^{(t)}, \zeta_{k,l})$, $\Delta_k^{(t)} = \frac{\mu}{K}(\Theta_k^{(t)} - \Theta_0^{(t)})$, and $\nabla_{\Theta_k}$ represents computing a gradient for $\Theta_k$. The gradient may be understood as a derivative of the function $f(\Theta_k^{(t)}, \zeta_{k,l})$, and the gradient may be a Euclidean gradient, or may be another gradient. $U_k^{(t)}$ and $V_k^{(t)}$ are obtained by performing truncated SVD decomposition with a rank of X on the first intermediate state, to be specific, $[U_k^{(t)}, \Sigma_k^{(t)}, V_k^{(t)}] = SVD_X(\widehat{\Theta}_k^{(t)}) = SVD_X(\Theta_k^{(t-1)} - \eta^{(t-1)}\hat{g}_k^{(t-1)})$, [] is a computing result of $SVD_X$(.), $SVD_X$(.) represents computing X maximum singular values and singular vectors corresponding to the X singular values, $\Sigma_k^{(t)} \in \mathbb{R}^{X \times X}$ is a diagonal matrix that includes the X maximum singular values and that is obtained after decomposition, $U_k^{(t)} \in \mathbb{R}^{M \times X}$ is a left singular matrix obtained after decomposition, and $V_k^{(t)} \in \mathbb{R}^{N \times X}$ is a right singular matrix obtained after decomposition.

Then, after the Riemannian gradient is obtained, the weight matrix of the local model is updated based on the Riemannian gradient:

$$\Theta_k^{(t+1)} = \mathcal{R}_{\Theta_k^{(t)}}\left(-\eta^{(t)}\hat{g}_k^{(t)}\right) = U_k^{(t+1)}\Sigma_k^{(t+1)}(V_k^{(t+1)})^T.$$

$\mathcal{R}_{\Theta_k^{(t)}}(.)$ represents Riemannian retraction (retraction) and is obtained by performing truncated SVD with a rank of X on an updated weight matrix, namely, a second intermediate state $\widehat{\Theta}_k^{(t+1)} = \Theta_k^{(t)} - \eta^{(t)}\hat{g}_k^{(t)}$ of first data $\Theta_k^{(t+1)}$, to be specific, $[U_k^{(t+1)}, \Sigma_k^{(t+1)}, V_k^{(t+1)}] = \mathrm{SVD}_X(\widehat{\Theta}_k^{(t+1)}) = \mathrm{SVD}_X(\Theta_k^{(t)} - \eta^{(t)}\hat{g}_k^{(t)})$, [ ] is a computing result of $\mathrm{SVD}_X(.)$, $\mathrm{SVD}_X(.)$ represents computing X maximum singular values and singular vectors corresponding to the X singular values, $\Sigma_k^{(t+1)} \in \mathbb{R}^{X \times X}$ is a diagonal matrix that includes the X maximum singular values and that is obtained after decomposition, $U_k^{(t+1)} \in \mathbb{R}^{M \times X}$ is a left singular matrix obtained after decomposition, and $V_k^{(t+1)} \in \mathbb{R}^{N \times X}$ is a right singular matrix obtained after decomposition. Similar to the first intermediate state $\widehat{\Theta}_k^{(t)}$, the second intermediate state $\widehat{\Theta}_k^{(t+1)}$ is a difference between the first data $\Theta_k^{(t)}$ in the $t^{th}$ time of processing and a product of a Riemannian gradient $\hat{g}_k^{(t)}$ obtained in the $t^{th}$ time of processing and a learning rate $\eta^{(t)}$ of the model in the $t^{th}$ time of processing.

For example, the third data is any one of the following: the first data $G_{t+1}$ itself, a first singular matrix of the first data $G_{t+1}$ and a second singular matrix of the first data $G_{t+1}$, first randomly precoded data of the first singular matrix and second randomly precoded data of the second singular matrix, and third randomly precoded data and fourth randomly precoded data, where

the third randomly precoded data is a product of the first randomly precoded data and a preset power parameter, the fourth randomly precoded data is a product of the second randomly precoded data and the preset power parameter, and the preset power parameter is determined by a preset power control policy. The preset power control policy may be set according to an actual situation, and is not specifically limited. For example, the preset power control policy may be that an inversely proportional relationship exists between channel quality of the second data processing device and sending power of the second data processing device.

Specifically, in a case in which the third data is the first singular matrix of the first data $G_{t+1}$ and the second singular matrix of the first data $G_{t+1}$, different from a case in which the first data $G_{t+1}$ is directly sent, the first singular matrix of the first data $G_{t+1}$ and the second singular matrix of the first data $G_{t+1}$ are separately sent, so that transmission overheads of the data processing device A can be reduced. For example, the first data $G_{t+1}$ is an M×N weight matrix with a rank of X, the transmission overheads of the data processing device A may be reduced from O(M×N) to O(X×(M+N)), where O( ) represents time complexity.

In this solution, after obtaining the first data $G_{t+1}$, the data processing device A may transfer data information of the first data $G_{t+1}$ in any one of the foregoing manners, to be specific, transfer the third data to the first data processing device, so that the first data processing device can obtain new second data based on the third data of the plurality of second data processing devices.

Further, for example, the third data is the first singular matrix and the second singular matrix; and correspondingly, the data processing method further includes:

performing singular value decomposition on the second intermediate state of the first data $G_{t+1}$ to obtain the second left singular matrix, the second diagonal matrix, and the second right singular matrix of the second intermediate state, where the second intermediate state is a third difference between the first data $G_t$ and the Riemannian gradient $Q_t$; and obtaining the first singular matrix based on the second left singular matrix and the second diagonal matrix, and obtaining the second singular matrix based on the second right singular matrix and the second diagonal matrix.

In this solution, truncated singular value decomposition with a rank of X is performed on the second intermediate state, to obtain the second left singular matrix, the second diagonal matrix, and the second right singular matrix of the second intermediate state; then the first singular matrix is obtained based on the second left singular matrix and the second diagonal matrix; and the second singular matrix is obtained based on the second left and right singular matrices and the second diagonal matrix. For example, a product of the second left singular matrix and a square root of the second diagonal matrix is used as the first singular matrix, and a product of the second right singular matrix and a square root of the second diagonal matrix is used as the second singular matrix.

For example, when the first data $G_{t+1}$ is the weight matrix of the neural network model, the first data $G_{t+1}$ is $\Theta_k^{(t+1)} = U_k^{(t+1)}\Sigma_k^{(t+1)}(V_k^{(t+1)})^T = \tilde{U}_k^{(t+1)}(\tilde{V}_k^{(t+1)})^T$, and three matrices corresponding to $\Theta_k^{(t+1)}$ are split

into two matrices for representation. Therefore, the first singular matrix is $\widetilde{U}_k^{(t+1)} = U_k^{(t+1)}\sqrt{\Sigma_k^{(t+1)}} \in \mathbb{R}^{M \times X}$, and the second singular matrix is $\widetilde{V}_k^{(t+1)} = V_k^{(t+1)}\sqrt{\Sigma_k^{(t+1)}} \in \mathbb{R}^{N \times X}$. The three matrices may be obtained by performing truncated singular value decomposition with a rank of X on the second intermediate state $\widehat{\Theta}_k^{(t+1)}$ of the first

data $G_{t+1}$, to be specific, $[U_k^{(t+1)}, \Sigma_k^{(t+1)}, V_k^{(t+1)}] = SVD_X\left(\widehat{\Theta}_k^{(t+1)}\right), \widehat{\Theta}_k^{(t+1)} = \Theta_k^{(t)} - \eta^{(t)}\widehat{g}_k^{(t)}$.

For example, the third data is the first randomly precoded data and the second randomly precoded data; and correspondingly, the data processing method further includes:

separately performing random precoding on the first singular matrix and the second singular matrix to obtain the first randomly precoded data and the second randomly precoded data.

In this solution, the first randomly precoded data corresponding to the first singular matrix and the second randomly precoded data corresponding to the second singular matrix may be obtained by separately performing random precoding on the first singular matrix and the second singular matrix. Specifically, in this embodiment of this application, the first randomly precoded data may be obtained after the first singular matrix is multiplied by a precoding matrix, and the second randomly precoded data may be obtained after the second singular matrix is multiplied by a precoding matrix. Each element in the precoding matrix is a random number, to implement random coding. For example, each element $F_k[i,j]$ in a precoding matrix $F_k \in \mathbb{R}^{X \times X}$ corresponding to a second data processing device k may be obtained through Rademacher distribution, i and j are row and column coordinates of an element in the precoding matrix $F_k$, a probability

P of each element meets a condition $P\left(F_k[i,j] = \frac{1}{X}\right) = P\left(F_k[i,j] = -\frac{1}{X}\right) = \frac{1}{2}$, each element is either $\frac{1}{X}$ or

$-\frac{1}{X}$, and X is the foregoing rank. Further, precoding matrices used by all second data processing devices may be the same or may be different.

For example, the third data is the first randomly precoded data and the second randomly precoded data. Correspondingly, the sending third data to the first data processing device includes:

sending the first randomly precoded data to the first data processing device by using a first radio resource same as that of another second data processing device, and sending the second randomly precoded data to the first data processing device by using a second radio resource same as that of another second data processing device; or
the third data is the third randomly precoded data and the fourth randomly precoded data, and correspondingly, the sending third data to the first data processing device includes:
sending the third randomly precoded data to the first data processing device by using a first radio resource same as that of another second data processing device, and sending the fourth randomly precoded data to the first data processing device by using a second radio resource same as that of another second data processing device.

The first radio resource being the same as that of another second data processing device means that the data processing device A and the another second data processing device use a same radio resource for data transmission, to be specific, use a same time-frequency resource. Similarly, the second radio resource being the same as that of another second data processing device means that the data processing device A and another second data processing device use a same radio resource for data transmission, to be specific, use a same time-frequency resource.

For example, the first radio resource and the second radio resource may be two radio resources that have a same time domain resource but different frequency domain resources, or two radio resources that have different time domain resources.

In this solution, when the third data is the first randomly precoded data and the second randomly precoded data, or the third data is the third randomly precoded data and the fourth randomly precoded data, the data processing device A may send the third data to the first data processing device in an over-the-air aggregation manner. The over-the-air aggregation manner means that the data processing device A sends the third data by using a radio resource same as that of another second data processing device. In other words, the data processing method in this solution creatively proposes that random precoding is first performed on data, and then randomly precoded data is sent in an over-the-air aggregation manner, so that the data processing method is compatible with over-the-air aggregation. For example, when the data processing method in this solution is applied to a federated learning scenario, this solution can be used to not only ensure a fixed-rank attribute of a model, helping reducing storage overheads, transmission overheads, and/or computing overheads of model data, but also fully use a radio resource.

Using an example in which the first data is weight data of a neural network model, the following specifically describes a process of obtaining the first randomly precoded data, the second randomly precoded data, the third randomly precoded data, and the fourth randomly precoded data.

For an over-the-air aggregation scenario of federated learning, if over-the-air aggregation is directly performed on the first singular matrix $\widetilde{U}_k^{(t+1)}$ and the second singular matrix $\widetilde{V}_k^{(t+1)}$ of each second data processing device, an aggregated signal obtained by the first data processing device becomes:

$$\sum_{k=1}^{K} \widetilde{U}_k^{(t+1)} \times \sum_{k=1}^{K} \left(\widetilde{V}_k^{(t+1)}\right)^T = \sum_{k=1}^{K} \widetilde{U}_k^{(t+1)} (\widetilde{V}_k^{(t+1)})^T + \sum_{k=1,e\neq k}^{K} \widetilde{U}_k^{(t+1)} (\widetilde{V}_e^{(t+1)})^T$$

$$= \sum_{k=1}^{K} \Theta_k^{(t+1)} + \sum_{k=1,e\neq k}^{K} \widetilde{U}_k^{(t+1)} (\widetilde{V}_e^{(t+1)})^T$$

In this way, a cross item $\left(\sum_{k=1,e\neq k}^{K} \widetilde{U}_k^{(t+1)} (\widetilde{V}_e^{(t+1)})^T\right)$ is generated, and an originally required aggregation model $\sum_{k=1}^{K} \Theta_k^{(t+1)}$ cannot be directly obtained. Therefore, embodiments of this application creatively propose a precoding-based transmission method. Specific operations of each second data processing device k are as follows:

(1) Obtain first precoded data $S_{Uk}^{(t+1)} = \widetilde{U}_k^{(t+1)} F_k$ and second precoded data $S_{Vk}^{(t+1)} = \left(\widetilde{V}_k^{(t+1)} F_k\right)^T$ based on a precoder:

$F_k \in \mathbb{R}^{X \times X}$ is a precoding matrix of the second data processing device k, each element $F_k[i,j]$ is independently obtained by using Rademacher distribution, $P\left(F_k[i,j] = \frac{1}{X}\right) = P\left(F_k[i,j] = -\frac{1}{X}\right) = \frac{1}{2}$, and P represents a probability.

An effect of this is that the aggregated signal received by the first data processing device meets:

$$\mathbb{E}\left[\sum_{k=1}^{K} \widetilde{U}_k^{(t+1)} F_k \times \sum_{k=1}^{K} F_k^T \left(\widetilde{V}_k^{(t+1)}\right)^T\right] =$$

$$\mathbb{E}\left[\sum_{k=1}^{K} \widetilde{U}_k^{(t+1)} F_k F_k^T (\widetilde{V}_k^{(t+1)})^T + \sum_{k=1,e\neq k}^{K} \widetilde{U}_k^{(t+1)} F_k F_e^T (\widetilde{V}_e^{(t+1)})^T\right] = \sum_{k=1}^{K} \Theta_k^{(t+1)}$$
, where $\mathbb{E}$ represents an expectation.

The second precoded data is $S_{Vk}^{(t+1)} = \left(\widetilde{V}_k^{(t+1)} F_k\right)^T = F_k^T \left(\widetilde{V}_k^{(t+1)}\right)^T$, e is a value from 1 to K, and e and k are different. Because an expected value of the second term $\sum_{k=1,e\neq k}^{K} \widetilde{U}_k^{(t+1)} F_k F_e^T (\widetilde{V}_e^{(t+1)})^T$ is 0, and the second term may be eliminated, the first data processing device may obtain an aggregation model $\sum_{k=1}^{K} \Theta_k^{(t+1)}$.

(2) Third precoded data $p_k^{(t+1)} S_{Uk}^{(t+1)}$ and fourth precoded data $p_k^{(t+1)} S_{Vk}^{(t+1)}$ may be obtained with reference to a preset power control policy for signal transmission:

The preset power parameter $p_k^{(t+1)}$ is determined based on the preset power control policy, for example, $p_k^{(t+1)}$ may be inversely proportional to channel fading $h_k$ (which may be historical channel fading or estimated channel fading) of the

$$p_k^{(t+1)} = \begin{cases} \frac{\sqrt{\rho}}{h_k}, if\ |\mathrm{h}_k| > \kappa \\ 0, otherwise \end{cases}, \quad \rho \in \mathbb{R}$$

second data processing device and the first data processing device, is a

transmit power gain, $\kappa \in \mathbb{R}$ is a *0, otherwise* truncation threshold, and $\mathbb{R}$ is a real number; or $p_k^{(t+1)}$ may be determined based on another power control policy, which is not limited herein. The preset power control policy is used to control transmission of the first precoded data $S_{Uk}^{(t+1)}$ and the second precoded data $S_{Vk}^{(t+1)}$. Therefore, a superscript of the preset power parameter is (t+1).

For example, the third data is the first data $G_{t+1}$ itself, and the second data processing device may send the first data $G_{t+1}$ to the first data processing device in a manner such as time division multiple access (time division multiple access, TDMA), orthogonal frequency division multiple access (orthogonal frequency division multiple access, OFDMA), or random access.

TDMA is a communication technology for implementing sharing of a transmission medium (generally in the radio field) or a network. It allows a plurality of users to use a same frequency in different time slices (slots). The users transmit in rapid succession, one after the other, each using a time slice of the user. This allows a plurality of users to share a same transmission medium (for example, a radio frequency). OFDMA is a communication technology for implementing multiple access by dividing a transmission bandwidth into a series of orthogonal and non-overlapping subcarrier sets and allocating different subcarrier sets to different users. Random access is a technology in which a user sends a random access preamble to attempt to access a network. Random access is classified into contention-based random access and non-contention-based random access.

Correspondingly, the obtaining, by the first data processing device, second data based on third data from the plurality of second data processing devices specifically includes:
projecting an average value onto a fixed-rank manifold to obtain the second data, where the average value is an average value of a plurality of pieces of first data $G_{t+1}$.

In this embodiment of this application, when the second data processing device directly sends the first data $G_{t+1}$, the first data processing device obtains the second data by projecting the average value onto the fixed-rank (the rank is X) manifold, so as to obtain the second data based on the third data of the plurality of second data processing devices.

Further, for example, the projecting an average value onto a fixed-rank manifold to obtain the second data specifically includes:

performing singular value decomposition on the average value to obtain a third left singular matrix, a third diagonal matrix, and a third right singular matrix; and
obtaining the second data based on the third left singular matrix, the third diagonal matrix, and the third right singular matrix.

This embodiment of this application provides a specific implementation of projecting the average value onto the fixed-rank manifold to obtain the second data, to be specific, performing truncated singular value decomposition with a rank of X on the average value, and then obtaining the second data based on the third left singular matrix, the third diagonal matrix, and the third right singular matrix that are obtained through decomposition.

Using an example in which the first data is weight data of a neural network model, the following specifically describes a process in which the first data processing device obtains the second data based on the plurality of pieces of third data.

The third data is an updated local model $\Theta_k^{(t+1)}$, the second data is a new global model $\Theta_0^{(t+1)}$, and an update formula of the global model is:

$$\Theta_0^{(t+1)} = \mathcal{P}_{M_X}\left(\frac{1}{K}\sum_{k=1}^{K} \Theta_k^{(t+1)}\right)$$

$\mathcal{P}_{M_X}(.)$ represents projecting an average value $\left(\frac{1}{K}\sum_{k=1}^{K} \Theta_k^{(t+1)}\right)$ of a plurality of updated local models onto a fixed-rank manifold $M_X$, to be specific, a manifold with a rank of X. A specific projection manner may be performing truncated SVD with a rank of X on the average value of the plurality of updated local models, to be specific,

$$\Theta_0^{(t+1)} = U_0^{(t+1)} \Sigma_0^{(t+1)} (V_0^{(t+1)})^T \text{, where } [U_0^{(t+1)}, \Sigma_0^{(t+1)}, V_0^{(t+1)}] = SVD_X(\tfrac{1}{K}\sum_{k=1}^{K} \Theta_k^{(t+1)})$$

For another example, the third data is the first singular matrix and the second singular matrix, and the second data processing device may send the first singular matrix and the second singular matrix to the first data processing device in a manner such as TDMA, OFDMA, or random access.

Correspondingly, the obtaining, by the first data processing device, second data based on third data from the plurality of second data processing devices specifically includes:

projecting a first product onto a fixed-rank manifold to obtain the second data, where the first product is a product of a first matrix and a second matrix, the first matrix is obtained based on first singular matrices of the plurality of second data processing devices, and the second matrix is obtained based on second singular matrices of the plurality of second data processing devices.

In this embodiment, the first product is projected onto the fixed-rank (the rank is X) manifold to obtain the second data, implementing obtaining of the second data based on the third data of the plurality of second data processing devices. For example, the first matrix is (a sum of the first singular matrices of the plurality of second data processing devices) divided by (a square root of K), where K is a quantity of the plurality of second data processing devices. Similarly, the second matrix is (a sum of the second singular matrices of the plurality of second data processing devices) divided by (the square root of K), where K is the quantity of the plurality of second data processing devices.

Further, for example, the projecting a first product onto a fixed-rank manifold to obtain the second data specifically includes:

performing singular value decomposition on the first product to obtain a fourth left singular matrix, a fourth diagonal matrix, and a fourth right singular matrix; and obtaining the second data based on the fourth left singular matrix, the fourth diagonal matrix, and the fourth right singular matrix.

This embodiment of this application provides a specific implementation of projecting the first product onto the fixed-rank manifold to obtain the second data, to be specific, performing truncated singular value decomposition with a rank of X on the first product, and then obtaining the second data based on the fourth left singular matrix, the fourth diagonal matrix, and the fourth right singular matrix that are obtained through decomposition.

Using an example in which the first data is weight data of a neural network model, the following specifically describes a process in which the first data processing device obtains the second data based on the plurality of pieces of third data.

The third data is the first singular matrix $\widetilde{U}_k^{(t+1)}$ of the first data $G_{t+1}$ and the second singular matrix $\widetilde{V}_k^{(t+1)}$ of the first data $G_{t+1}$, the second data is a new global model $\Theta_0^{(t+1)}$, and an update formula of the global model is:

$$\Theta_0^{(t+1)} = \mathcal{P}_{M_X}\left(\frac{1}{\sqrt{K}}\left(\sum_{k=1}^{K} \widetilde{U}_k^{(t+1)}\right) \times \frac{1}{\sqrt{K}}\left(\sum_{k=1}^{K} \left(\widetilde{V}_k^{(t+1)}\right)^T\right)\right)$$

$\mathcal{P}_{M_X}(.)$ represents projecting a first product $\left(\frac{1}{\sqrt{K}}\left(\sum_{k=1}^{K}\widetilde{U}_k^{(t+1)}\right) \times \frac{1}{\sqrt{K}}\left(\sum_{k=1}^{K}\left(\widetilde{V}_k^{(t+1)}\right)^T\right)\right)$ onto a fixed-rank manifold $M_X$, namely, a manifold with a rank of X. A specific projection manner may be performing truncated SVD with a rank of X on the first product, to be specific, $\Theta_0^{(t+1)} = U_0^{(t+1)} \Sigma_0^{(t+1)} (V_0^{(t+1)})^T$, where

$$[U_0^{(t+1)}, \Sigma_0^{(t+1)}, V_0^{(t+1)}] = SVD_X\left(\tfrac{1}{\sqrt{K}}\left(\sum_{k=1}^{K}\widetilde{U}_k^{(t+1)}\right) \times \tfrac{1}{\sqrt{K}}\left(\sum_{k=1}^{K}\left(\widetilde{V}_k^{(t+1)}\right)^T\right)\right).$$

For another example, the third data is the first randomly precoded data and the second randomly precoded data, or the third data is the third randomly precoded data and the fourth randomly precoded data. The obtaining, by the first data processing device, second data based on third data from the plurality of second data processing devices specifically includes:

obtaining a third aggregated signal and a fourth aggregated signal based on a first aggregated signal and a second aggregated signal, so that an expectation of a second product is equal to an expectation of a third product; and obtaining the second data based on the third aggregated signal and the fourth aggregated signal, where the second product is a product of the third aggregated signal and the fourth aggregated signal, and the third product is a product of a sum of the first randomly precoded data of the plurality of second data processing devices and a sum of the second randomly precoded data of the plurality of second data processing devices, where

the third data is the first randomly precoded data and the second randomly precoded data, the first aggregated signal carries the first randomly precoded data of the plurality of second data processing devices on a first radio resource, and the second aggregated signal carries the second randomly precoded data of the plurality of second data processing devices on a second radio resource; or the third data is the third randomly precoded data and the fourth randomly precoded data, the first aggregated signal carries the third randomly precoded data of the plurality of second data processing devices on a first radio resource, and the second aggregated signal carries the fourth randomly precoded data of the plurality of second data processing devices on a second radio resource.

In this embodiment, when the second data processing device transmits the third data in an over-the-air aggregation manner, the first data processing device receives two aggregated signals, namely, the first aggregated signal and the second aggregated signal, and first obtains the third aggregated signal and the fourth aggregated signal based on the first aggregated signal and the second aggregated signal, so as to eliminate impact of channel fading, channel noise, and the like, where the third aggregated signal and the fourth aggregated signal may be respectively understood as an estimated signal of the sum of the first randomly precoded data of the plurality of second data processing devices and an estimated signal of the sum of the second randomly precoded data of the plurality of second data processing devices. The second data may be obtained by using the estimated third aggregated signal and the estimated fourth aggregated signal.

Specifically, a method for obtaining the third aggregated signal and the fourth aggregated signal through estimation based on the first aggregated signal and the second aggregated signal may be a least squares (least squares, LS) estimation method, a minimum mean square error (minimum mean square error, MMSE) estimation method, a weighted least squares (weighted least squares, WLS) estimation method, or the like.

For example, the obtaining the second data based on the third aggregated signal and the fourth aggregated signal includes:

projecting a fifth aggregated signal onto a fixed-rank manifold to obtain the second data, where the fifth aggregated signal is obtained based on the third aggregated signal and the fourth aggregated signal.

Further, the projecting a fifth aggregated signal onto a fixed-rank manifold to obtain the second data specifically includes:

performing singular value decomposition on a fifth aggregated signal to obtain a fifth left singular matrix, a fifth diagonal matrix, and a fifth right singular matrix; and

obtaining the second data based on the fifth left singular matrix, the fifth diagonal matrix, and the fifth right singular matrix.

The fifth aggregated signal is obtained based on a product of $(Q3/\sqrt{K})$ and $(Q4/\sqrt{K})$, where Q3 is the third aggregated signal, Q4 is the fourth aggregated signal, and K is the total quantity of the second data processing devices.

Using an example in which the first data is weight data of a neural network model, the following specifically describes a process in which the first data processing device obtains the second data based on the plurality of pieces of third data.

The third data is third randomly precoded data $p_k^{(t+1)} S_{Uk}^{(t+1)}$ and fourth randomly precoded data $p_k^{(t+1)} S_{Vk}^{(t+1)}$, and the second data is a new global model $\Theta_0^{(t+1)}$.

It is assumed that a k$^{th}$ second data processing device transmits first randomly precoded data $S_{Uk}^{(t+1)}$ and second randomly precoded data $S_{Vk}^{(t+1)}$ by using a preset power parameter $p_k^{(t+1)}$. After all the second data processing devices perform over-the-air aggregation, aggregated signals received by the first data processing device are:

first aggregated signal $Y_U^{(t+1)} = \sum_{k=1}^{K} h_k^{(t+1)} p_k^{(t+1)} s_{Uk}^{(t+1)} + Z_U^{(t+1)}$ , and

second aggregated signal $Y_V^{(t+1)} = \sum_{k=1}^{K} h_k^{(t+1)} p_k^{(t+1)} s_{Vk}^{(t+1)} + Z_V^{(t+1)}$ , where

$h_k^{(t+1)}$ represents channel fading (channel fading) between the k$^{th}$ second data processing device and the first data processing device; and $Z_U^{(t+1)}$ and $Z_V^{(t+1)}$ are additive white Gaussian noise (additive white Gaussian noise, AWGN) vectors, $Z_U^{(t+1)} \in \mathbb{C}^{M \times X}$, $Z_V^{(t+1)} \in \mathbb{C}^{X \times N}$, and $h_k^{(t+1)}$ and $p_k^{(t+1)}$ are complex scalars. M and N are dimensionality of the matrix, X is the rank, and $\mathbb{C}$ is a complex number. Because the first randomly precoded data $S_{Uk}^{(t+1)}$ and the second randomly precoded data $S_{Vk}^{(t+1)}$ are transmitted, superscripts of $h_k^{(t+1)}$, $Z_U^{(t+1)}$, and $Z_V^{(t+1)}$ are (t+1). Therefore, $Y_U^{(t+1)}$ and $Y_V^{(t+1)}$ are received aggregated signals superposed with channel fading and AWGN.

Next, a third aggregated signal $\hat{X}_U^{(t+1)}$ and a fourth aggregated signal $\hat{X}_V^{(t+1)}$ are estimated based on the received aggregated signals:

The first data processing device may use the least squares estimation method to perform, based on the received first aggregated signal $Y_U^{(t+1)}$ and second aggregated signal $Y_V^{(t+1)}$, estimation on aggregated sent signals

$$X_U^{(t+1)} = \sum_{k=1}^{K} S_{Uk}^{(t+1)}$$ and $$X_V^{(t+1)} = \sum_{k=1}^{K} S_{Vk}^{(t+1)}$$, to obtain estimated signals:

third aggregated signal $$\hat{X}_U^{(t+1)} = \frac{Re(Y_U^{(t+1)})}{\rho^{(t+1)}}$$, and

fourth aggregated signal $$\hat{X}_V^{(t+1)} = \frac{Re(Y_V^{(t+1)})}{\rho^{(t+1)}}$$, where

Re represents a real part of a signal, and $\rho^{(t+1)}$ is a receive power coefficient under an unbiased power policy, so that the expectation of the second product is equal to the expectation of the third product, to be specific,

$$\mathbb{E}\left[\hat{X}_U^{(t+1)} \times \hat{X}_V^{(t+1)}\right] = \mathbb{E}[X_U^{(t+1)} \times X_V^{(t+1)}]$$. To be specific, the estimated third aggregated signal is equivalent to a sum of first randomly precoded signals of the plurality of second data processing devices before over-the-air aggregation-based sending, and the estimated fourth aggregated signal is equivalent to a sum of second randomly precoded signals of the plurality of second data processing devices before over-the-air aggregation-based sending.

Finally, the global model $\Theta_0^{(t+1)}$ is updated based on the third aggregated signal $\hat{X}_U^{(t+1)}$ and the fourth aggregated signal $\hat{X}_V^{(t+1)}$:

After obtaining $\hat{X}_U^{(t+1)}$ and $\hat{X}_V^{(t+1)}$, the second data processing device may obtain a global model by using an aggregated model:

$$\Theta_0^{(t+1)} = \mathcal{P}_{M_X}\left(\frac{1}{\sqrt{K}} \hat{X}_U^{(t+1)} \times \frac{1}{\sqrt{K}} \hat{X}_V^{(t+1)}\right),$$

where

$\mathcal{P}_{M_X}(.)$ represents projecting content in the brackets onto a fixed-rank manifold $M_X$, namely, a manifold with a rank of X. A specific projection manner may be performing truncated SVD with a rank of X on the content in the brackets, to be

specific, $$\Theta_0^{(t+1)} = U_0^{(t+1)} \Sigma_0^{(t+1)} (V_0^{(t+1)})^T$$, where

$$[U_0^{(t+1)}, \Sigma_0^{(t+1)}, V_0^{(t+1)}] = SVD_X(\tfrac{1}{\sqrt{K}} \hat{X}_U^{(t+1)} \times \tfrac{1}{\sqrt{K}} \hat{X}_V^{(t+1)})$$

An embodiment of this application further provides a data processing method. The method is applied to the data processing system shown in FIG. 1. The data processing system includes a first data processing device 101 and a plurality of second data processing devices. In this embodiment of this application, a process of performing the data processing method by each second data processing device is the same. The following uses a data processing device A as an example for specific description. The data processing device A is one of the plurality of second data processing devices.

Refer to FIG. 4 and FIG. 5. FIG. 4 is a method flowchart of another data processing method according to an embodiment of this application, and FIG. 5 is a method flowchart of another data processing method according to an embodiment of this application. The procedure shown in FIG. 4 is a procedure performed by the data processing device A, and the procedure shown in FIG. 5 is a procedure performed by the first data processing device. Specifically, the data processing method includes the following steps:

401: Perform random precoding on first data of the data processing device A and second data of the data processing device A to obtain first randomly precoded data of the first data and second randomly precoded data of the second data.

For example, the first data and the second data are data having a Riemann characteristic. Alternatively, the first data and the second data are other data that does not have a Riemann characteristic, and this is not specifically limited.

There may be many manners of performing random precoding on the first data and the second data, provided that coding randomness is ensured.

402: Send the first randomly precoded data to the first data processing device by using a first radio resource same as that of another second data processing device, and send the second randomly precoded data to the first data processing device by using a second radio resource same as that of another second data processing device.

Correspondingly, the first data processing device receives a first aggregated signal and a second aggregated signal, where the first aggregated signal carries first randomly precoded data of the plurality of second data processing devices on the first radio resource, and the second aggregated signal carries second randomly precoded data of the plurality of second data processing devices on the second radio resource. The first data processing device obtains fourth data based on the first aggregated signal and the second aggregated signal. The fourth data is related to first data of the plurality of second data processing devices and second data of the plurality of second data processing devices.

The first radio resource being the same as that of another second data processing device means that the data processing device A and the another second data processing device use a same radio resource for data transmission, to be specific, use a same time-frequency resource. Similarly, the second radio resource being the same as that of another second data processing device means that the data processing device A and the another second data processing device use a same radio resource for data transmission, to be specific, use a same time-frequency resource. In addition, the data processing device A may alternatively send the first randomly precoded data to the first data processing device based on a preset power control policy by using the first radio resource same as that of another second data processing device; or send the second randomly precoded data to the first data processing device based on the preset power control policy by using the second radio resource same as that of another second data processing device.

For example, the first radio resource and the second radio resource may be two radio resources that have a same time domain resource but different frequency domain resources, or two radio resources that have different time domain resources.

In this embodiment of this application, the data processing device A performs random precoding on the first data and the second data to obtain the first randomly precoded data and the second randomly precoded data, and then may send the first randomly precoded data and the second randomly precoded data to the first data processing device in an over-the-air aggregation manner, so that an expectation of a product of the first aggregated signal and the second aggregated signal that are received by the first data processing device is the same as an expectation of a sum of products of the plurality of second data processing devices, where the product of the second data processing device is a product of the first data and the second data of the second data processing device, thereby implementing unbiased data estimation. In addition, the first data processing device may obtain, based on the first aggregated signal and the second aggregated signal, the fourth data related to a plurality of pieces of first data and a plurality of pieces of second data.

Specifically, assuming that the first data is S and the second data is D, random precoding is performed on the first data S based on a precoding matrix F to obtain first randomly precoded data SF, and similarly, random precoding is performed on the second data D to obtain second randomly precoded data $(DF)^T = F^T D^T$. Only when a form of the second randomly precoded data is $F^T D^T$, unbiased over-the-air aggregation data transmission of $S \times D^T$ can be implemented. To be specific, after the first randomly precoded data SF and the second randomly precoded data $F^T D^T$ are sent in the over-the-air aggregation manner, the first aggregated signal $\sum_{k=1}^{K} S_k F_k$ (K is a quantity of the second data processing devices) and the second aggregated signal $\sum_{k=1}^{K} F_k^T D_k^T$ received by the first data processing device meet the following formula:

$$\mathbb{E}\left[\sum_{k=1}^{K} S_k F_k \times \sum_{k=1}^{K} F_k^T D_k^T\right] =$$

$$\mathbb{E}\left[\sum_{k=1}^{K} S_k F_k F_k^T D_k^T + \sum_{k=1,e\neq k}^{K} S_k F_k F_e^T D_e^T\right] = \mathbb{E}\left[\sum_{k=1}^{K} S_k D_k^T\right]$$

where e is a value from 1 to K, e and k are different, an expectation of $\sum_{k=1,e\neq k}^{K} S_k F_k F_e^T D_e^T$ is 0, and $\sum_{k=1,e\neq k}^{K} S_k F_k F_e^T D_e^T$ may be eliminated.

For example, the solution in this embodiment is applicable to the following scenario: A plurality of second data processing devices monitor the data S and the data D. The first data processing device needs to obtain a sum/or an average value of products of the plurality of second data processing devices (to be specific, estimate a product of the data S and the data $D^T$), the product refers to the product of the data S and the data $D^T$ of the second data processing device, and on the basis of obtaining the sum of the plurality of products, the average value may be obtained by dividing the sum by a quantity of the second data processing devices. Specifically, over-the-air aggregation may be performed on the randomly precoded data of the data S to obtain the first aggregated signal, and over-the-air aggregation may be performed on the randomly precoded data of the data D to obtain the second aggregated signal. The two aggregated signals may be multiplied to obtain an estimated result of the sum of the products of the plurality of second data processing devices. Compared with the second data processing device multiplying S by D and then performing aggregation, multiplication complexity of the second data processing device may be reduced. If a sum of dimensionality of S and D is smaller than dimensionality of $S \times D^T$, transmission overheads may be further reduced.

For example, the data processing method further includes:

performing singular value decomposition on third data of the data processing device A to obtain a first left singular matrix $U_1$, a first diagonal matrix $\Sigma_1$, and a first right singular matrix $V_1$ of the third data; and
obtaining the first data based on the first left singular matrix and the first diagonal matrix, and obtaining the second data based on the first right singular matrix and the first diagonal matrix.

Specifically, the first data is $S = U_1\sqrt{\Sigma_1}$, and the second data is $D = V_1\sqrt{\Sigma_1}$.

For example, truncated singular value decomposition with a rank of X may be performed on the third data, to obtain the first left singular matrix, the first diagonal matrix, and the first right singular matrix.

Correspondingly, that the first data processing device obtains fourth data based on the first aggregated signal and the second aggregated signal specifically includes:

obtaining a third aggregated signal and a fourth aggregated signal based on the first aggregated signal and the second aggregated signal, so that an expectation of a first product is equal to an expectation of a second product; and
obtaining the fourth data based on the third aggregated signal and the fourth aggregated signal.

The first product is a product of the third aggregated signal and the fourth aggregated signal, and the second product is a product of the first randomly precoded data carried in the first aggregated signal (namely, a sum of the first randomly precoded data of the plurality of second data processing devices) and the second randomly precoded data carried in the second aggregated signal (namely, a sum of the second randomly precoded data of the plurality of second data processing devices).

In this solution, the third aggregated signal and the fourth aggregated signal are obtained first based on the first aggregated signal and the second aggregated signal. The third aggregated signal and the fourth aggregated signal may be respectively understood as being corresponding to an estimated signal of a sum of the first randomly precoded data of the plurality of second data processing devices of the first aggregated signal, and an estimated signal of a sum of the second randomly precoded data of the plurality of second data processing devices of the second aggregated signal. After impact such as channel fading and channel noise is eliminated from the first aggregated signal and the second aggregated signal, the third aggregated signal and the fourth aggregated signal may be obtained. Then, the fourth data may be obtained by using the estimated third aggregated signal and the estimated fourth aggregated signal.

For example, the obtaining the fourth data based on the third aggregated signal and the fourth aggregated signal specifically includes:

performing singular value decomposition on a fifth aggregated signal to obtain a second left singular matrix, a second diagonal matrix, and a second right singular matrix, where the fifth aggregated signal is obtained based on the third aggregated signal and the fourth aggregated signal; where for example, the fifth aggregated signal is obtained based on a product of $(Q3/\sqrt{K})$ and $(Q4/\sqrt{K})$, where Q3 is the third aggregated signal, Q4 is the fourth aggregated signal, and K is the total quantity of the second data processing devices; and

obtaining the fourth data based on the second left singular matrix, the second diagonal matrix, and the second right singular matrix.

In this embodiment, a specific method for obtaining the fourth data based on the third aggregated signal and the fourth aggregated signal is provided. Specifically, singular value decomposition is performed on the fifth aggregated signal to obtain the second left singular matrix, the second diagonal matrix, and the second right singular matrix, and then the fourth data may be obtained based on the second left singular matrix, the second diagonal matrix, and the second right singular matrix.

For example, truncated singular value decomposition with a rank of X may be performed on the fifth aggregated signal to obtain a second left singular matrix $U_2$, a second diagonal matrix $\Sigma_2$, and a second right singular matrix $V_2$, that is,

$$[U_2, \Sigma_2, V_2] = SVD_X(\tfrac{1}{\sqrt{K}}Q_3 \times \tfrac{1}{\sqrt{K}}Q_4).$$

In this case, the fourth data is $U_2\Sigma_2(V_2)^T$, and the fourth data is data having a Riemann characteristic.

Although the first singular matrix, the second singular matrix, the first aggregated signal, the second aggregated signal, the third aggregated signal, the fourth aggregated signal, and the like in the foregoing embodiments have same data names in different embodiments, data represented by same data names in different embodiments may be the same or may be different, which is not specifically limited.

The foregoing describes in detail the methods in embodiments of this application. The following provides apparatuses in embodiments of this application.

This application provides a data processing device, including modules configured to perform method steps performed by the second data processing device A in the method shown in FIG. 2.

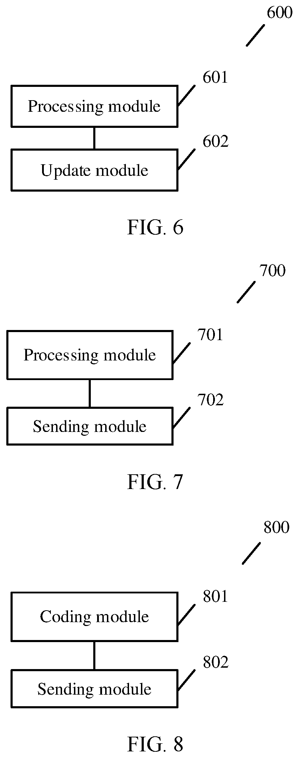

For example, FIG. 6 is a diagram of a structure of a data processing device according to an embodiment of this application.

A data processing device 600 includes:

a processing module 601, configured to determine, based on first data in the data processing device and second data from a first data processing device, a Riemannian gradient of the first data, where the first data and the second data are data having a Riemann characteristic; and
an update module 602, configured to update the first data based on the Riemannian gradient.

For example, the data processing device 600 further includes:
a sending module, configured to send third data to the first data processing device.

It should be noted that, for a specific execution process and a corresponding beneficial effect of the data processing device, refer to related descriptions of the data processing method shown in FIG. 2. Details are not described again.

This application provides a data processing device, including modules configured to perform method steps performed by the first data processing device in the method shown in FIG. 2.

FIG. 7 is a diagram of a structure of another data processing device according to an embodiment of this application.

A data processing device 700 includes:

a processing module 701, configured to obtain second data based on third data from a plurality of second data processing devices, where the second data is data having a Riemann characteristic; and
a sending module 702, configured to send the second data to the plurality of second data processing devices.

The data processing device 700 further includes:
a receiving module, configured to receive the third data from the plurality of second data processing devices. The third data is obtained based on first data in the second data processing device, and the first data is data having a Riemann characteristic.

It should be noted that, for a specific execution process and a corresponding beneficial effect of the data processing device, refer to related descriptions of the data processing method shown in FIG. 2. Details are not described again.

This application further provides a data processing device, including modules configured to perform the method shown in FIG. 4.

For example, FIG. 8 is a diagram of a structure of another data processing device according to an embodiment of this application.

A data processing device 800 includes:

a coding module 801, configured to perform random precoding on first data of the data processing device and second data of the data processing device to obtain first randomly precoded data of the first data and second randomly precoded data of the second data; and

a sending module 802, configured to send the first randomly precoded data to the first data processing device by using a first radio resource same as that of another second data processing device, and send the second randomly precoded data to the first data processing device by using a second radio resource same as that of another second data processing device.

It should be noted that, for a specific execution process and a corresponding beneficial effect of the data processing device, refer to related descriptions of the data processing method shown in FIG. 4. Details are not described again.

This application further provides a data processing device, including modules configured to perform the method shown in FIG. 5.

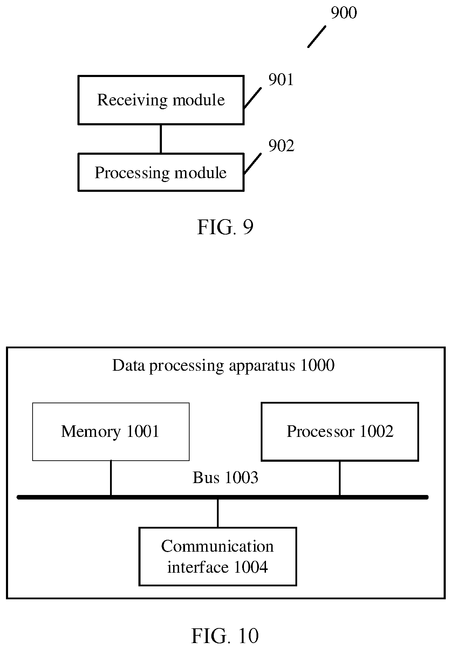

For example, FIG. 9 is a diagram of a structure of another data processing device according to an embodiment of this application.

A data processing device 900 includes:

a receiving module 901, configured to receive a first aggregated signal and a second aggregated signal, where the first aggregated signal carries first randomly precoded data of a plurality of second data processing devices on a first radio resource, and the second aggregated signal carries second randomly precoded data of the plurality of second data processing devices on a second radio resource; and

a processing module 902, configured to obtain fourth data based on the first aggregated signal and the second aggregated signal, where the fourth data is related to first data of the plurality of second data processing devices and second data of the plurality of second data processing devices.

It should be noted that, for a specific execution process and a corresponding beneficial effect of the data processing device, refer to related descriptions of the data processing method shown in FIG. 5. Details are not described again.

FIG. 10 is a diagram of a structure of another data processing apparatus according to an embodiment of this application. An embodiment of this application further provides a data processing apparatus 1000.

The data processing apparatus 1000 includes a memory 1001, a processor 1002, a communication interface 1004, and a bus 1003. The memory 1001, the processor 1002, and the communication interface 1004 are communicatively connected to each other by using the bus 1003. There may be one or more memories 1001, and there may be one or more processors 1002.

For example, the data processing apparatus 1000 may be a chip or a chip system.

The memory 1001 may be a read-only memory (Read-Only Memory, ROM), a static storage device, a dynamic storage device, or a random access memory (Random Access Memory, RAM). The memory 1001 may store a program. When the program stored in the memory 1001 is executed by the processor 1002, the processor 1002 is configured to perform the steps of the data processing method in any one of the foregoing embodiments.

The processor 1002 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program to implement the data processing method in any one of the foregoing embodiments.

Alternatively, the processor 1002 may be an integrated circuit chip, and has a signal processing capability. In an implementation process, the steps of the data processing method in any embodiment of this application may be completed by using an integrated logic circuit of hardware in the processor 1002, or by using an instruction in a form of software. The processor 1002 may be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the data processing method described with reference to any embodiment of this application may be directly executed and accomplished by using a hardware decoding processor, or may be executed and accomplished by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 1001, and the processor 1002 reads information in the memory 1001 and completes the data processing method in any one of the foregoing embodiments in combination with hardware of the processor 1002.

The communication interface 1004 uses a transceiver apparatus such as but not limited to a transceiver, to implement communication between the data processing apparatus 1000 and another device or a communication network. For example, the data processing apparatus 1000 may obtain second data by using the communication interface 1004.

The bus 1003 may include a path for transmitting information between the components (for example, the memory 1001, the processor 1002, and the communication interface 1004) of the data processing apparatus 1000.

It should be noted that although only the memory, the processor, and the communication interface are shown in the data processing apparatus 1000 shown in FIG. 10, in a specific implementation process, persons skilled in the art should understand that the data processing apparatus 1000 further includes other components necessary for implementing a normal operation. In addition, according to a specific requirement, persons skilled in the art should understand that the data processing apparatus 1000 may further include hardware components for implementing other additional functions. In addition, persons skilled in the art should understand that the data processing apparatus 1000 may alternatively include only components required for implementing embodiments of this application, but does not necessarily include all the components shown in FIG. 10.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions according to the embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium (for example, a solid state disk).

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A data processing method, applied to a data processing device A in a data processing system, wherein the data processing system comprises a first data processing device and a plurality of second data processing devices, the data processing device A is one of the plurality of second data processing devices, and the method comprises the following steps:

> determining, based on first data in the data processing device A and second data from the first data processing device, a Riemannian gradient of the first data, wherein the first data and the second data are data having a Riemann characteristic; and
> updating the first data based on the Riemannian gradient.

2. The method according to claim 1, wherein the determining, based on first data in the data processing device A and second data from the first data processing device, a Riemannian gradient of the first data comprises:
in a $t^{th}$ time of processing, computing, based on a first difference between first data $G_t$ in the data processing device A and second data $W_t$ from the first data processing device and a first intermediate state of the first data $G_t$, a Riemannian gradient $Q_t$ of the first data $G_t$, wherein the first intermediate state is a second difference between first data $G_{t-1}$ and a Riemannian gradient $Q_{t-1}$ in a $(t-1)^{th}$ time of processing.

3. The method according to claim 2, wherein the updating the first data based on the Riemannian gradient comprises:
updating the first data $G_t$ based on the Riemannian gradient $Q_t$ to obtain first data $G_{t+1}$, wherein a distance between the first data $G_{t+1}$ and the second data $W_t$ is less than a distance between the first data $G_t$ and second data $W_{t-1}$ from the first data processing device in the $(t-1)^{th}$ time of processing; or a distance between the first data $G_{t+1}$ and second data $W_{t+1}$ from the first data processing device in a $(t+1)^{th}$ time of processing is less than a distance between the first data $G_t$ and the second data $W_t$.

4. The method according to claim 3, wherein the updating the first data $G_t$ based on the Riemannian gradient $Q_t$ to obtain first data $G_{t+1}$ comprises:

> performing singular value decomposition on a second intermediate state of the first data $G_{t+1}$ to obtain a second left singular matrix, a second diagonal matrix, and a second right singular matrix, wherein the second intermediate state is a third difference between the first data $G_t$ and the Riemannian gradient $Q_t$; and
> obtaining the first data $G_{t+1}$ based on the second left singular matrix, the second diagonal matrix, and the second right singular matrix.

5. The method according to any one of claims 2 to 4, wherein the Riemannian gradient $Q_t$ of the first data $G_t$ is computed based on the first difference, a first left singular matrix of the first intermediate state, and a first right singular matrix of the first intermediate state.

6. The method according to any one of claims 2 to 4, wherein the Riemannian gradient $Q_t$ of the first data $G_t$ is computed based on a standard gradient, the first difference, and the first intermediate state, wherein the standard gradient is a derivative of a target loss function corresponding to a task to which the first data $G_t$ is oriented.

7. The method according to claim 6, wherein the Riemannian gradient $Q_t$ of the first data $G_t$ is computed based on the standard gradient, the first difference, a first left singular matrix of the first intermediate state, and a first right singular matrix of the first intermediate state.

8. The method according to any one of claims 3 to 7, wherein the method further comprises:
sending third data to the first data processing device, wherein the third data is obtained based on the first data $G_{t+1}$.

9. The method according to claim 8, wherein the third data is any one of the following: the first data $G_{t+1}$ itself, a first singular matrix of the first data $G_{t+1}$ and a second singular matrix of the first data $G_{t+1}$, first randomly precoded data of the first singular matrix and second randomly precoded data of the second singular matrix, and third randomly precoded data and fourth randomly precoded data, wherein
the third randomly precoded data is a product of the first randomly precoded data and a preset power parameter, the fourth randomly precoded data is a product of the second randomly precoded data and the preset power parameter, and the preset power parameter is determined by a preset power control policy.

10. The method according to claim 9, wherein the third data is the first singular matrix and the second singular matrix, and the method further comprises:

performing singular value decomposition on the second intermediate state of the first data $G_{t+1}$ to obtain the second left singular matrix, the second diagonal matrix, and the second right singular matrix of the second intermediate state, wherein the second intermediate state is the third difference between the first data $G_t$ and the Riemannian gradient $Q_t$; and

obtaining the first singular matrix based on the second left singular matrix and the second diagonal matrix, and obtaining the second singular matrix based on the second right singular matrix and the second diagonal matrix.

11. The method according to claim 9 or 10, wherein the third data is the first randomly precoded data and the second randomly precoded data; and

the method further comprises:

separately performing random precoding on the first singular matrix and the second singular matrix to obtain the first randomly precoded data and the second randomly precoded data.

12. The method according to any one of claims 9 to 11, wherein the third data is the first randomly precoded data and the second randomly precoded data, and the sending third data to the first data processing device comprises:

sending the first randomly precoded data to the first data processing device by using a first radio resource same as that of another second data processing device, and sending the second randomly precoded data to the first data processing device by using a second radio resource same as that of another second data processing device; or

the third data is the third randomly precoded data and the fourth randomly precoded data, and the sending third data to the first data processing device comprises:

sending the third randomly precoded data to the first data processing device by using a first radio resource same as that of another second data processing device, and sending the fourth randomly precoded data to the first data processing device by using a second radio resource same as that of another second data processing device.

13. The method according to any one of claims 1 to 12, wherein the first data comprises at least one of the following: parameter data of a neural network model, a feature matrix of a channel matrix in a multiple-input multiple-output transmission scenario, and a principal component data matrix of an image.

14. A data processing method, applied to a first data processing device in a data processing system, wherein the data processing system further comprises a plurality of second data processing devices, and the method comprises the following steps:

obtaining second data based on third data from the plurality of second data processing devices, wherein the second data is data having a Riemann characteristic; and

sending the second data to the plurality of second data processing devices.

15. The method according to claim 14, wherein the method further comprises:

receiving the third data from the plurality of second data processing devices, wherein the third data is obtained based on first data in the second data processing device, and the first data is data having a Riemann characteristic.

16. The method according to claim 14 or 15, wherein the third data is any one of the following: the first data itself, a first singular matrix of the first data and a second singular matrix of the first data, first randomly precoded data of the first singular matrix and second randomly precoded data of the second singular matrix, and third randomly precoded data and fourth randomly precoded data, wherein

the first randomly precoded data and the second randomly precoded data are obtained by respectively performing random precoding on the first singular matrix and the second singular matrix, the third randomly precoded data is a product of the first randomly precoded data and a preset power parameter, the fourth randomly precoded data is a product of the second randomly precoded data and the preset power parameter, and the preset power parameter is determined by a preset power control policy.

17. The method according to claim 16, wherein the third data is the first data itself, and the obtaining second data based on third data from the plurality of second data processing devices comprises:

projecting an average value onto a fixed-rank manifold to obtain the second data, wherein the average value is an average value of a plurality of pieces of first data.

18. The method according to claim 17, wherein the projecting an average value onto a fixed-rank manifold to obtain the second data comprises:

> performing singular value decomposition on the average value to obtain a third left singular matrix, a third diagonal matrix, and a third right singular matrix; and
> obtaining the second data based on the third left singular matrix, the third diagonal matrix, and the third right singular matrix.

19. The method according to claim 16, wherein the third data is the first singular matrix and the second singular matrix, and the obtaining second data based on third data from the plurality of second data processing devices comprises:
projecting a first product onto a fixed-rank manifold to obtain the second data, wherein the first product is a product of a first matrix and a second matrix, the first matrix is obtained based on the first singular matrices of the plurality of second data processing devices, and the second matrix is obtained based on the second singular matrices of the plurality of second data processing devices.

20. The method according to claim 19, wherein the projecting a first product onto a fixed-rank manifold to obtain the second data comprises:

> performing singular value decomposition on the first product to obtain a fourth left singular matrix, a fourth diagonal matrix, and a fourth right singular matrix; and
> obtaining the second data based on the fourth left singular matrix, the fourth diagonal matrix, and the fourth right singular matrix.

21. The method according to claim 16, wherein the obtaining second data based on third data from the plurality of second data processing devices comprises:

> obtaining a third aggregated signal and a fourth aggregated signal based on a first aggregated signal and a second aggregated signal, so that an expectation of a second product is equal to an expectation of a third product, wherein the second product is a product of the third aggregated signal and the fourth aggregated signal, and the third product is a product of a sum of the first randomly precoded data of the plurality of second data processing devices and a sum of the second randomly precoded data of the plurality of second data processing devices, wherein
> the third data is the first randomly precoded data and the second randomly precoded data, the first aggregated signal carries the first randomly precoded data of the plurality of second data processing devices on a first radio resource, and the second aggregated signal carries the second randomly precoded data of the plurality of second data processing devices on a second radio resource; or the third data is the third randomly precoded data and the fourth randomly precoded data, the first aggregated signal carries the third randomly precoded data of the plurality of second data processing devices on a first radio resource, and the second aggregated signal carries the fourth randomly precoded data of the plurality of second data processing devices on a second radio resource; and
> obtaining the second data based on the third aggregated signal and the fourth aggregated signal.

22. The method according to claim 21, wherein the obtaining the second data based on the third aggregated signal and the fourth aggregated signal comprises:

> performing singular value decomposition on a fifth aggregated signal to obtain a fifth left singular matrix, a fifth diagonal matrix, and a fifth right singular matrix, wherein the fifth aggregated signal is obtained based on the third aggregated signal and the fourth aggregated signal; and
> obtaining the second data based on the fifth left singular matrix, the fifth diagonal matrix, and the fifth right singular matrix.

23. The method according to any one of claims 15 to 22, wherein the first data comprises at least one of the following: parameter data of a neural network model, a feature matrix of a channel matrix in a multiple-input multiple-output transmission scenario, and a principal component data matrix of an image.

24. A data processing method, applied to a data processing device A in a data processing system, wherein the data processing system comprises a first data processing device and a plurality of second data processing devices, the data processing device A is one of the plurality of second data processing devices, and the method comprises the following steps:

performing random precoding on first data of the data processing device A and second data of the data processing device A to obtain first randomly precoded data of the first data and second randomly precoded data of the second data; and

sending the first randomly precoded data to the first data processing device by using a first radio resource same as that of another second data processing device, and sending the second randomly precoded data to the first data processing device by using a second radio resource same as that of another second data processing device.

25. The method according to claim 24, wherein the method further comprises:

performing singular value decomposition on third data of the data processing device A to obtain a first left singular matrix, a first diagonal matrix, and a first right singular matrix of the third data; and

obtaining the first data based on the first left singular matrix and the first diagonal matrix, and obtaining the second data based on the first right singular matrix and the first diagonal matrix.

26. A data processing method, applied to a first data processing device in a data processing system, wherein the data processing system further comprises a plurality of second data processing devices, and the method comprises the following steps:

receiving a first aggregated signal and a second aggregated signal, wherein the first aggregated signal carries first randomly precoded data of the plurality of second data processing devices on a first radio resource, and the second aggregated signal carries second randomly precoded data of the plurality of second data processing devices on a second radio resource; and

obtaining fourth data based on the first aggregated signal and the second aggregated signal, wherein the fourth data is related to first data of the plurality of second data processing devices and second data of the plurality of second data processing devices.

27. The method according to claim 26, wherein
the obtaining fourth data based on the first aggregated signal and the second aggregated signal comprises:

obtaining a third aggregated signal and a fourth aggregated signal based on the first aggregated signal and the second aggregated signal, so that an expectation of a first product is equal to an expectation of a second product, wherein the first product is a product of the third aggregated signal and the fourth aggregated signal, and the second product is a product of the first randomly precoded data carried in the first aggregated signal and the second randomly precoded data carried in the second aggregated signal; and

obtaining the fourth data based on the third aggregated signal and the fourth aggregated signal.

28. The method according to claim 27, wherein the obtaining the fourth data based on the third aggregated signal and the fourth aggregated signal comprises:

performing singular value decomposition on a fifth aggregated signal to obtain a second left singular matrix, a second diagonal matrix, and a second right singular matrix, wherein the fifth aggregated signal is obtained based on the third aggregated signal and the fourth aggregated signal; and

obtaining the fourth data based on the second left singular matrix, the second diagonal matrix, and the second right singular matrix.

29. The method according to claim 28, wherein the fourth data is data having a Riemann characteristic.

30. A data processing device, comprising a module configured to perform the method according to any one of claims 1 to 13.

31. A data processing device, comprising a module configured to perform the method according to any one of claims 14 to 23.

32. A data processing device, comprising a module configured to perform the method according to any one of claims 24 and 25.

33. A data processing device, comprising a module configured to perform the method according to any one of claims 26 to 29.

34. A data processing apparatus, wherein the data processing apparatus comprises one or more processors, and the one or more processors are configured to execute a computer program stored in one or more memories, so that the data processing apparatus is enabled to implement the method according to any one of claims 1 to 29.

35. The data processing apparatus according to claim 34, wherein the data processing apparatus further comprises the one or more memories.

36. The data processing apparatus according to claim 34 or 35, wherein the data processing apparatus is a chip or a chip system.

37. A computer-readable storage medium, wherein the computer-readable storage medium stores instructions, and when the instructions are executed by a processor, the method according to any one of claims 1 to 29 is implemented.

38. A computer program product, comprising a computer program, wherein when the computer program is executed, the method according to any one of claims 1 to 29 is implemented.

101

First data
processing device

...

| Second data | ... | Second data |
| processing device 1 | | processing device K |

FIG. 1

Determine, based on first data in a data processing device A and second data from a first data processing device, a Riemannian gradient of the first data — 201

Update the first data based on the Riemannian gradient — 202

Send third data to the first data processing device — 203

FIG. 2

```
┌─────────────────────┐                    ┌─────────────────────┐
│ Second data processing│                   │  First data processing│
│      device A        │                    │       device         │
└─────────────────────┘                    └─────────────────────┘
           │                                           │
┌─────────────────────┐                                │
│ Determine a Riemannian│                               │
│  gradient of first data│                              │
└─────────────────────┘                                │
           │                                           │
┌─────────────────────┐                                │
│ Update the first data based on the                    │
│    Riemannian gradient │                              │
└─────────────────────┘                                │
           │        Send third data                    │
           │──────────────────────────────────────────▶│
           │                                           │
                                        ┌──────────────────────────────┐
                                        │ Obtain second data based on third│
                                        │  data of a plurality of second data│
                                        │      processing devices      │
                                        └──────────────────────────────┘
           │         Send the second data              │
           │◀──────────────────────────────────────────│
           │                                           │
```

FIG. 3

┌────────────────────────────────────────────────────────────────┐
│ Perform random precoding on first data of a data processing device A │   401
│   and second data of the data processing device A to obtain first   │
│    randomly precoded data of the first data and second randomly     │
│              precoded data of the second data                       │
└────────────────────────────────────────────────────────────────┘
                              │
                              ▼
┌────────────────────────────────────────────────────────────────┐
│ Send the first randomly precoded data to a first data processing device │
│   by using a first radio resource same as that of another second data   │   402
│  processing device, and send the second randomly precoded data to the   │
│ first data processing device by using a second radio resource same as   │
│          that of another second data processing device                  │
└────────────────────────────────────────────────────────────────┘

FIG. 4

┌────────────────────────────────────────────────────────────────┐
│     Receive a first aggregated signal and a second aggregated signal    │
└────────────────────────────────────────────────────────────────┘
                              │
                              ▼
┌────────────────────────────────────────────────────────────────┐
│ Obtain fourth data based on the first aggregated signal and the second  │
│                        aggregated signal                               │
└────────────────────────────────────────────────────────────────┘

FIG. 5

600

601

Processing module

602

Update module

FIG. 6

700

701

Processing module

702

Sending module

FIG. 7

800

801

Coding module

802

Sending module

FIG. 8

900

901

Receiving module

902

Processing module

FIG. 9

Data processing apparatus 1000

Memory 1001

Processor 1002

Bus 1003

Communication interface 1004

FIG. 10

# INTERNATIONAL SEARCH REPORT

| | International application No. |
|---|---|
| | **PCT/CN2022/119907** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC:H04W H04B G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 联邦学习, 黎曼, 流形, 固定秩, 奇异值, 梯度, 更新, 无线电, 基站, 融合, 预编码, 载波, federated learning, Riemannian manifold, order, singular value, gradient, renew, update, radio, base station, fusion, precoding, carrier

**C. DOCUMENTS CONSIDERED TO BE RELEVANT**

| Category* | Citation of document, with indication, where appropriate, of the relevant passages | Relevant to claim No. |
|---|---|---|
| X | CN 114189899 A (SOUTHEAST UNIVERSITY) 15 March 2022 (2022-03-15) description, paragraphs [0002]-[0126], and figure 1 | 1, 13-15, 23-38 |
| A | CN 113271126 A (SOUTHEAST UNIVERSITY) 17 August 2021 (2021-08-17) entire document | 1-38 |
| A | CN 109671030 A (XI'AN JIAOTONG UNIVERSITY) 23 April 2019 (2019-04-23) entire document | 1-38 |
| A | US 2019138934 A1 (PRAKASH, Saurav et al.) 09 May 2019 (2019-05-09) entire document | 1-38 |
| A | US 2022103221 A1 (QUALCOMM INC.) 31 March 2022 (2022-03-31) entire document | 1-38 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 May 2023** | **23 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/119907**

| Patent document cited in search report | | | Publication date (day/month/year) | Patent family member(s) | | | Publication date (day/month/year) |
|---|---|---|---|---|---|---|---|
| CN | 114189899 | A | 15 March 2022 | None | | | |
| CN | 113271126 | A | 17 August 2021 | None | | | |
| CN | 109671030 | A | 23 April 2019 | None | | | |
| US | 2019138934 | A1 | 09 May 2019 | US | 11244242 | B2 | 08 February 2022 |
| | | | | US | 2022237515 | A1 | 28 July 2022 |
| US | 2022103221 | A1 | 31 March 2022 | WO | 2022072980 | A1 | 07 April 2022 |

Form PCT/ISA/210 (patent family annex) (July 2022)